# EUROPÄISCHE PATENTANMELDUNG

(11) **EP 4 534 292 A2**
(43) Veröffentlichungstag der Anmeldung: **09.04.2025**
(21) Anmeldenummer: 25158510.5
(22) Anmeldetag: 12.07.2021
(51) Int. Cl.: B33Y 50/02

(54) **VORRICHTUNG ZUR EXTRUSIONSBASIERTEN HERSTELLUNG WENIGSTENS EINES DREIDIMENSIONALEN OBJEKTS**

(30) Priorität: 17.07.2020 DE 102020118979
(62) Teilanmeldung aus: 21742382.1
(71) Anmelder: Hans Weber Maschinenfabrik GmbH, 96317 Kronach (DE)
(72) Erfinder: HAMBERGER, Mario, 96317 Kronach (DE); STUMPF, Felix, 96317 Kronach (DE)
(74) Vertreter: Hafner & Kohl PartmbB

(57) **Zusammenfassung**

Vorrichtung (1) zur extrusionsbasierten Herstellung wenigstens eines dreidimensionalen Objekts, umfassend wenigstens eine Extrusionseinheit (2), welche zum Aufschmelzen eines Extrusionsmaterials und/oder zum Aufbringen eines aufgeschmolzenen Extrusionsmaterials auf einen Untergrund eingerichtet ist, umfassend eine Einrichtung (6), welche zur Erfassung einer einen Prozessparameter eines vermittels der Vorrichtung durchführbaren oder durchgeführten extrusionsbasierten Herstellungsprozesses und/oder einen Objektparameter eines vermittels der Vorrichtung (1) herzustellenden oder hergestellten dreidimensionalen Objekts betreffenden Parameterinformation, sowie zur Erzeugung einer einen Erfassungsort und/oder eine Erfassungszeit einer entsprechenden Parameterinformation beschreibenden Orts- und/oder Zeitinformation eingerichtet ist.

## Beschreibung

Die Erfindung betrifft eine Vorrichtung zur extrusionsbasierten Herstellung wenigstens eines dreidimensionalen Objekts, umfassend wenigstens eine Extrusionseinheit, welche zum Aufschmelzen eines Extrusionsmaterials und/oder zum Aufbringen eines aufgeschmolzenen Extrusionsmaterials auf einen Untergrund eingerichtet ist.

Entsprechende Extrusionseinrichtung zur extrusionsbasierten Herstellung eines oder mehrerer dreidimensionaler Objekte sind aus dem Stand der Technik dem Grunde nach bekannt.

Wenngleich sich mit entsprechenden Extrusionseinrichtungen in zuverlässiger Weise dreidimensionale Objekte in unterschiedlichsten räumlich-körperlichen Konfigurationen herstellen lassen, besteht ein Bedarf danach, entsprechende Bau- bzw. Herstellungsprozesse, z. B. zum Zwecke der Prozessüberwachung, besser überwachen und damit gegebenenfalls auch besser steuern zu können.

Sofern hierzu bereits technische Ansätze bestehen, sind diese insbesondere im Hinblick auf Aussagekraft und Zuverlässigkeit der Überwachungsergebnisse verbesserungs- bzw. weiterentwicklungsbedürftig.

Der Erfindung liegt die Aufgabe zugrunde, eine Extrusionseinrichtung mit einer verbesserten Möglichkeit zur Implementierung einer Prozessüberwachung anzugeben.

Die Aufgabe wird durch eine Vorrichtung zur extrusionsbasierten Herstellung wenigstens eines dreidimensionalen Objekts gemäß Anspruch 1 gelöst. Die hierzu abhängigen Ansprüche betreffen mögliche Ausführungsformen der Extrusionseinrichtung.

Ein erster Aspekt der hierin beschriebenen Erfindung betrifft eine Vorrichtung zur extrusionsbasierten Herstellung wenigstens eines dreidimensionalen Objekts. Unter dem Begriff "Objekt" kann grundsätzlich jedweder dreidimensionale Gegenstand oder jedweder Abschnitt eines dreidimensionalen Gegenstands verstanden werden. Ein dreidimensionaler Gegenstand kann z. B. ein technisches Bauelement oder eine technische Bauelementgruppe sein. Ein Abschnitt eines dreidimensionalen Gegenstands kann demnach ein Abschnitt eines technischen Bauelements oder ein Abschnitt einer technischen Bauelementgruppe sein.

Die Vorrichtung ist zur extrusionsbasierten Herstellung wenigstens eines dreidimensionalen Objekts eingerichtet. Im Besonderen ist die Vorrichtung zur extrusionsbasierten Herstellung wenigstens eines dreidimensionalen Objekts über einen zumindest abschnittsweisen, gegebenenfalls vollständigen, lagen- bzw. schichtweisen extrusionsbasierten Aufbau eines entsprechenden dreidimensionalen Objekts eingerichtet. Die extrusionsbasierte Herstellung eines entsprechenden dreidimensionalen Objekts kann vermittels der Vorrichtung sonach zumindest abschnittsweise, gegebenenfalls vollständig, lagen- bzw. schichtweise erfolgen. Die Vorrichtung ist entsprechend zur extrusionsbasierten Verarbeitung wenigstens eines Extrusionsmaterials, d. h. zur Extrusion wenigstens eines Extrusionsmaterials auf einen Untergrund, eingerichtet. Unter einem Extrusionsmaterial ist typischerweise ein extrudierbares bzw. extrusionsfähiges Kunststoffmaterial zu verstehen. Bei einem vermittels der Extrusionseinrichtung verarbeitbaren Extrusionsmaterial handelt es sich sonach typischerweise um ein thermoplastisches extrudierbares bzw. extrusionsfähiges Kunststoffmaterial. Insbesondere kommen thermoplastische extrudierbare bzw. extrusionsfähige Kunststoffmaterialien in Betracht. Der Begriff "Kunststoffmaterial" kann auch Mischungen wenigstens zweier chemisch unterschiedlicher Kunststoffmaterialien und/oder Mischungen wenigstens eines Kunststoffmaterials mit wenigstens einem weiteren Material, wie z. B. einem Füllstoffmaterial, beinhalten.

Die Vorrichtung umfasst typischerweise wenigstens eine Extrusionseinheit, welche zum Aufschmelzen bzw. Plastifizieren eines entsprechenden Extrusionsmaterials und zum, insbesondere bahnförmigen bzw. strangförmigen, Aufbringen eines aufgeschmolzenen Extrusionsmaterials auf einen Untergrund, wie z. B. eine Bauplattform oder ein Objekt, oder auf eine bereits auf einen Untergrund aufgebrachte Lage bzw. Schicht, worunter gegebenenfalls auch nur eine einzelne Materialbahn bzw. ein einzelner Materialstrang zu verstehen sein kann, des oder eines Extrusionsmaterials, eingerichtet ist. Die Extrusionseinheit ist insbesondere eingerichtet, ein aufgeschmolzenes Extrusionsmaterial kontinuierlich oder quasi-kontinuierlich, d. h. z. B. in einer kontinuierlichen oder quasi-kontinuierlichen Material- bzw. Schmelzebahn bzw. in einem kontinuierlichen oder quasi-kontinuierlichen Material- bzw. Schmelzestrang, auf einen Untergrund aufzubringen.

Die Extrusionseinheit kann in wenigstens einem translatorischen und/oder rotatorischen Bewegungsfreiheitsgrad relativ zu einem Untergrund und/oder zu einem dreidimensionalen Objekt bewegbar gelagert sein. Der Extrusionseinheit kann sonach eine, insbesondere motorische, Antriebseinrichtung zugeordnet sein, über welche sich eine die Extrusionseinheit in eine translatorische und/oder rotatorische Bewegung entlang einer relativ zu einem Untergrund und/oder zu einem dreidimensionalen Objekt versetzende Antriebskraft bzw. ein entsprechendes Antriebsmoment erzeugen lässt. Eine entsprechende Antriebseinrichtung kann Bestandteil einer Lagerungseinrichtung, welche zur bewegbaren Lagerung der Extrusionseinheit in wenigstens einem translatorischen und/oder rotatorischen Bewegungsfreiheitsgrad relativ zu einem Untergrund und/oder zu einem dreidimensionalen Objekt eingerichtet ist, sein. Eine entsprechende Lagerungseinrichtung kann sonach z. B. als eine ein- oder mehrachsige Robotereinrichtung ausgebildet sein oder eine solche umfassen.

Eine entsprechende Extrusionseinheit umfasst typischerweise wenigstens eine Extruderkammer, wenigstens eine in der Extruderkammer angeordnete, eine Extruderachse definierende Extruderschnecke sowie wenigstens einen, insbesondere düsenartigen bzw. -förmigen, Austrittsbereich, über welchen vermittels der Extrusionseinheit aufgeschmolzenes Extrusionsmaterial auf einen Untergrund austragbar ist. Ein entsprechender Austrittsbereich umfasst typischerweise wenigstens eine, insbesondere düsenartige bzw. -förmige, Austrittsöffnung, über welche vermittels der Extrusionseinheit aufgeschmolzenes Extrusionsmaterial auf einen Untergrund austragbar ist.

Die Extruderkammer ist typischerweise durch eine die Extruderkammer begrenzende bzw. definierende ein- oder mehrteilige Extruderkammerbaugruppe gebildet. Die Extruderkammer kann sonach ein- oder mehrteilig ausgebildet sein. Die Extruderkammerbaugruppe umfasst typischerweise eine oder mehrere die Extruderkammer begrenzende bzw. definierende Extruderkammerwandungen. Die Extruderkammer kann unterschiedlich funktionalisierte Bereiche bzw. Zonen, wie z. B. einen Befüllbereich, in welchem ein Befüllen der Extruderkammer mit aufzuschmelzendem Extrusionsmaterial erfolgt, einen Aufschmelzbereich, in welchem das Aufschmelzen des in die Extruderkammer gefüllten aufzuschmelzenden Extrusionsmaterials erfolgt, sowie einen Austrittsbereich, über welchen vermittels der Extrusionseinheit aufgeschmolzenes Extrusionsmaterial auf einen Untergrund austragbar ist, aufweisen. Der Austrittsbereich kann in einem Düsenabschnitt der Extruderkammer(baugruppe) angeordnet oder ausgebildet sein.

Die vorgenannten Bestandteile der Extrusionseinheit können unter Ausbildung einer Extrusionsbaugruppe miteinander koppelbar bzw. im Betrieb der Extrusionseinheit miteinander gekoppelt sein.

Die Vorrichtung umfasst ferner eine hardware- und/oder softwaremäßig implementierte Einrichtung, welche zur Erfassung einer einen Prozessparameter eines vermittels der Vorrichtung durchführbaren oder durchgeführten extrusionsbasierten Herstellungsprozesses und/oder einen Objektparameter eines vermittels der Vorrichtung herzustellenden oder hergestellten dreidimensionalen Objekts betreffenden Parameterinformation, sowie zur Erzeugung einer einen Erfassungsort und/oder eine Erfassungszeit einer entsprechenden Parameterinformation beschreibenden Orts- und/oder Zeitinformation eingerichtet ist.

Vermittels der Einrichtung lassen sich sonach Parameterinformationen erfassen, welche Prozessparameter eines vermittels der Vorrichtung durchführbaren oder durchgeführten extrusionsbasierten Herstellungsprozesses, d. h. im Allgemeinen Parameter, welche einen vermittels der Vorrichtung durchführbaren oder durchgeführten extrusionsbasierten Herstellungsprozess direkt oder indirekt beschreiben, und/oder welche Objektparameter eines vermittels der Vorrichtung herzustellenden oder hergestellten dreidimensionalen Objekts, d. h. im Allgemeinen Parameter, welche ein vermittels der Vorrichtung herzustellendes oder hergestelltes dreidimensionales Objekt direkt oder indirekt beschreiben, betreffen. Vermittels entsprechenden Parameterinformationen - bei diesen kann es sich z. B. um datenverarbeitungsmäßig verarbeitbare Daten handeln - können sonach sowohl Herstellungsprozesse, welche vermittels der Vorrichtung durchführbar bzw. durchgeführt sind, als auch dreidimensionale Objekte, welche über einen vermittels der Vorrichtung durchführbaren oder durchgeführten Herstellungsprozess herzustellen oder hergestellt sind, zumindest teilweise, gegebenenfalls vollständig, beschrieben werden.

Beispielhafte vermittels der Einrichtung erfassbare Prozessparameter werden nachfolgend in nicht abschließender Weise näher erläutert:
Ein entsprechender Prozessparameter kann wenigstens einen chemischen und/oder wenigstens physikalischen Parameter eines Prozessraums, in welchem ein vermittels der Vorrichtung durchführbarer oder durchgeführter extrusionsbasierter Herstellungsprozess erfolgt, beschreiben. Ein entsprechender chemischer Parameter eines Prozessraums kann insbesondere eine chemische Zusammensetzung einer innerhalb des Prozessraums herrschenden Atmosphäre, insbesondere einer Gasatmosphäre, sein. Selbstverständlich kann ein entsprechender chemischer Paramater ein Gradient einer innerhalb des Prozessraums herrschenden Atmosphäre, insbesondere einer Gasatmosphäre, sein. Ein entsprechender physikalischer Parameter eines Prozessraums kann insbesondere ein innerhalb des Prozessraums herrschender Druck oder eine innerhalb des Prozessraums herrschende Temperatur sein. Selbstverständlich kann ein entsprechender physikalischer Paramater ein Gradient eines innerhalb des Prozessraums herrschenden Drucks oder einer innerhalb des Prozessraums herrschenden Temperatur sein.

Alternativ oder ergänzend kann ein entsprechender Prozessparameter wenigstens einen chemischen und/oder geometrischen und/oder physikalischen Parameter wenigstens eines im Rahmen eines vermittels der Vorrichtung durchführbaren oder durchgeführten extrusionsbasierten Herstellungsprozesses verwendbaren oder verwendeten Extrusionsmaterials beschreiben. Ein entsprechender chemischer Parameter eines Extrusionsmaterials kann insbesondere eine chemische Zusammensetzung eines Extrusionsmaterials sein. Selbstverständlich kann ein entsprechender chemischer Paramater ein Gradient einer chemischen Zusammensetzung eines Extrusionsmaterials sein. Ein entsprechender geometrischer Parameter eines Extrusionsmaterials, insbesondere einer auf einen Untergrund aufgetragenen Extrusionsmaterialbahn, d. h. insbesondere eine entsprechende Material- bzw. Schmelzebahn bzw. ein entsprechender Material- bzw. Schmelzestrang, kann insbesondere eine Abmessung, insbesondere eine Höhe, Länge, Breite, und/oder eine Form, insbesondere eine Querschnittsform, eines Extrusionsmaterials, insbesondere einer auf einen Untergrund aufgetragenen Material- bzw. Schmelzebahn bzw. eines auf einen Untergrund aufgetragenen Material- bzw. Schmelzestrangs, sein. Selbstverständlich kann ein entsprechender geometrischer Parameter ein Gradient einer Abmessung, insbesondere einer Höhe, Länge, Breite, und/oder einer Form, insbesondere einer Querschnittsform, eines Extrusionsmaterials, insbesondere einer auf einen Untergrund aufgetragenen Material- bzw.

Schmelzebahn bzw. eines auf einen Untergrund aufgetragenen Material- bzw. Schmelzestrangs, sein. Ein entsprechender physikalischer Parameter eines Extrusionsmaterials kann insbesondere eine Dichte, eine Festigkeit, eine Temperatur, eine Oberflächenbeschaffenheit oder eine Viskosität eines Extrusionsmaterials sein. Selbstverständlich kann ein entsprechender physikalischer Paramater ein Gradient einer Dichte, einer Festigkeit, einer Temperatur, einer Oberflächenbeschaffenheit oder einer Viskosität eines Extrusionsmaterials sein.

Alternativ oder ergänzend kann ein entsprechender Prozessparameter einen Parameter, insbesondere einen, gegebenenfalls örtlichen und/oder zeitlichen, Bewegungsparameter, einer Bewegungsbahn der Extrusionseinheit und/oder einer über die Extrusionseinheit auf einen Untergrund aufgebrachten Material- bzw. Schmelzebahn bzw. eines auf einen Untergrund aufgetragenen Material- bzw. Schmelzestrangs, beschreiben.

Alternativ oder ergänzend kann ein entsprechender Prozessparameter einen Parameter eines Untergrunds, wie z. B. einer Bauplattform, beschreiben. Ein entsprechender Parameter eines Untergrunds kann insbesondere eine Temperatur, eine Oberflächenbeschaffenheit, eines Untergrunds sein. Selbstverständlich kann ein entsprechender Paramater ein Gradient einer Temperatur oder einer Oberflächenbeschaffenheit eines Untergrunds sein.

Beispielhafte vermittels der Einrichtung erfassbare Objektparameter werden nachfolgend in nicht abschließender Weise näher erläutert:
Ein entsprechender Objektparameter kann wenigstens einen chemischen und/oder geometrischen und/oder wenigstens physikalischen Parameter, eines vermittels der Vorrichtung herzustellenden oder hergestellten dreidimensionalen Objekts oder Objektabschnitts beschreiben. Ein entsprechender chemischer Parameter kann insbesondere eine chemische Zusammensetzung eines vermittels der Vorrichtung herzustellenden oder hergestellten dreidimensionalen Objekts oder Objektabschnitts sein. Selbstverständlich kann ein entsprechender chemischer Parameter auch ein Gradient einer chemischen Zusammensetzung eines vermittels der Vorrichtung herzustellenden oder hergestellten dreidimensionalen Objekts oder Objektabschnitts sein. Ein entsprechender geometrischer Parameter kann insbesondere eine Abmessung, insbesondere eine Höhe, Länge, Breite, und/oder Form, insbesondere eine Querschnittsform, eines vermittels der Vorrichtung herzustellenden oder hergestellten dreidimensionalen Objekts oder Objektabschnitts sein. Selbstverständlich kann ein entsprechender geometrischer Parameter ein Gradient einer Abmessung, insbesondere einer Höhe, Länge, Breite, und/oder einer Form, insbesondere einer Querschnittsform, eines vermittels der Vorrichtung herzustellenden oder hergestellten dreidimensionalen Objekts oder Objektabschnitts sein. Ein entsprechender physikalischer Parameter kann insbesondere eine Dichte, eine Masse, eine Oberflächenbeschaffenheit oder eine Festigkeit eines vermittels der Vorrichtung herzustellenden oder hergestellten dreidimensionalen Objekts oder Objektabschnitts sein. Selbstverständlich kann ein entsprechender physikalischer Parameter auch ein Gradient einer Dichte, einer Masse, einer Oberflächenbeschaffenheit oder einer Festigkeit eines vermittels der Vorrichtung herzustellenden oder hergestellten dreidimensionalen Objekts oder Objektabschnitts sein.

Die Einrichtung ist, wie erwähnt, neben der Erfassung entsprechender Parameterinformationen auch zur Erzeugung von Orts- und/oder Zeitinformationen, wie z. B. Orts- und/oder Zeitkoordinaten, eingerichtet, welche einen Erfassungsort und/oder eine Erfassungszeit einer entsprechenden Parameterinformation beschreiben. Die Einrichtung ist typischerweise auch zur Zuordnung einer einen Erfassungsort und/oder eine Erfassungszeit einer entsprechenden Parameterinformation beschreibenden Orts- und/oder Zeitinformation zu einer jeweiligen Parameterinformation eingerichtet. Vermittels der Einrichtung lassen sich sonach entsprechende Orts- und/oder Zeitinformation zu jeweiligen erfassten Parameterinformationen erzeugen und diesen zuordnen. Jede Parameterinformation kann sonach mit einem "Orts- und/oder Zeitstempel" versehen werden, über welche sich erkennen lässt, an welchem Ort und/oder zu welcher Zeit die jeweilige Parameterinformation erfasst wurde. Der Ort kann über Parameter, wie z. B. Koordinaten, beschrieben werden, welche eine eindeutige Position des Ortes in einem Raumvolumen, d. h. insbesondere in einem Bauvolumen der Vorrichtung oder in einem Volumen eines vermittels der Vorrichtung herzustellenden oder hergestellten dreidimensionalen Objekts, definieren.

Die Einrichtung kann sonach einerseits eine hardware- und/oder softwaremäßig implementierte Erfassungseinrichtung umfassen, welche eingerichtet ist, Parameterinformationen zu erfassen, welche, wie erwähnt, einen Prozessparameter eines vermittels der Vorrichtung durchführbaren oder durchgeführten extrusionsbasierten Herstellungsprozesses und/oder einen Objektparameter eines vermittels der Vorrichtung herzustellenden oder hergestellten dreidimensionalen Objekts betreffen, und andererseits eine hardware- und/oder softwaremäßig implementierte Zuordnungseinrichtung umfassen, welche eingerichtet ist, einer entsprechenden Parameterinformation eine Orts- und/oder Zeitinformation zuzuordnen, welche einen jeweiligen Erfassungsort und/oder eine Erfassungszeit einer entsprechenden Parameterinformation beschreibt.

Vermittels der Einrichtung lässt sich sonach eine aussagekräftige Prozessüberwachung und - auswertung realisieren, welche sowohl entsprechende Prozessparamater als auch entsprechende Objektparameter berücksichtigen kann, sodass ein örtlich und/oder zeitlich aufgelöstes datenmäßiges Abbild eines vermittels der Vorrichtung durchführbaren oder durchgeführten Herstellungsprozess als auch ein örtlich und/oder zeitlich aufgelöstes datenmäßiges Abbild eines über einen vermittels der Vorrichtung durchführbaren oder durchgeführten Herstellungsprozess herzustellenden oder hergestellten dreidimensionalen Objekts erhalten werden kann. Insbesondere die Möglichkeit der Erzeugung bzw. Zuordnung entsprechender Orts- und/oder Zeitinformation zu jeweiligen Parameterinformationen liefert ein aussagekräftiges Abbild eines Herstellungsprozesses bzw. des (sukzessiven) Aufbaus eines dreidimensionalen Objekts, da sich, gegebenenfalls in Echt-Zeit, der Herstellungsprozess bzw. der (sukzessive) Aufbau eines dreidimensionalen Objekts örtlich und/oder zeitlich aufgelöst rekonstruieren lässt.

Insgesamt liegt damit eine verbesserte Vorrichtung zur extrusionsbasierten Herstellung wenigstens eines dreidimensionalen Objekts vor.

Die Einrichtung kann, wie erwähnt, eine Erfassungseinrichtung umfassen, welche wenigstens ein Erfassungselement, welches zur Erfassung einer Parameterinformation eingerichtet ist, umfasst. Die Erfassungseinrichtung kann insbesondere als Sensoreinrichtung ausgebildet sein, welche wenigstens ein Sensorelement, welches zur Erfassung einer Parameterinformation eingerichtet ist, umfasst.

Eine entsprechende Erfassungseinrichtung kann konkret z. B. als eine akustische und/oder optische und/oder thermische Erfassungseinrichtung ausgebildet sein, welche wenigstens ein Erfassungselement zur akustischen und/oder optischen und/oder thermischen Erfassung einer Parameterinformation umfasst. Die Erfassungseinrichtung kann sonach insbesondere als akustische und/oder optische und/oder thermische Sensoreinrichtung ausgebildet sein, welche ein akustisches und/oder optisches und/oder thermisches Sensorelement umfasst. Ein akustisches Erfassungs- bzw. Sensorelement kann z. B. ein Schallelement, insbesondere ein Ultraschallsensorelement, sein, ein optisches Erfassungs- bzw. Sensorelement kann z. B. ein Bilderfassungselement, wie z. B. ein CCD-Sensorelement, ein Pixelsensorelement, etc., sein, ein thermisches Erfassungs- bzw. Sensorelement kann z. B. ein Temperaturerfassungselement, wie z. B. ein Infrarotsensorelement sein. Grundsätzlich können alle Erfassungs- bzw. Sensorelemente verwendet werden, welche eine Erfassung entsprechender Parameterinformation ermöglichen, sodass ergänzend beispielhaft auf elektromagnetische Erfassungs- bzw. Sensorelement verwiesen wird.

Selbstverständlich kann die Einrichtung oder die Erfassungseinrichtung oder eine der Erfassungseinrichtung zugeordnete hardware- und/oder softwaremäßig implementierte Auswerteeinrichtung eingerichtet sein, auf Grundlage der von jeweiligen Erfassungs- bzw. Sensorelementen gelieferten Signale, entsprechende Parameterinformationen zu erzeugen. Eine entsprechende Auswerteeinrichtung kann einen hardware- und/oder softwaremäßigen Bestandteil der Einrichtung bilden.

Hinsichtlich der Anordnung der Einrichtung, d. h. insbesondere einer entsprechenden Erfassungseinrichtung, bestehen grundsätzlich zwei unterschiedliche Möglichkeiten. Die Einrichtung bzw. eine entsprechende Erfassungseinrichtung kann entweder stationär und damit unbewegbar bzw. lage- bzw. ortsfest oder nicht stationär und damit bewegbar bzw. nicht lage- bzw. ortsfest angeordnet sein.

In der stationären Variante kann die Einrichtung bzw. eine entsprechende Erfassungseinrichtung direkt oder indirekt an einem stationären Bestandteil der Vorrichtung, wie z. B. einer Gehäusestruktur, einer Bauplattform, etc., angeordnet oder ausgebildet sein.

In der nicht-stationären Variante kann die Einrichtung bzw. eine entsprechende Erfassungseinrichtung direkt oder indirekt an einem nicht-stationären und damit einem bewegbar gelagerten Bestandteil der Vorrichtung, wie z. B. an oder in einem bewegbar gelagerten Arm einer Lagerungs- bzw. Robotereinrichtung oder an oder in der, wie erwähnt, bewegbar gelagerten Extrusionseinheit, angeordnet oder ausgebildet sein, wobei sie selbst nicht (aktiv) relativ zu dem nicht-stationären Bestandteil der Vorrichtung bewegbar gelagert ist. Bewegungen der Einrichtung bzw. der entsprechenden Erfassungseinrichtung ergeben sich hier typischerweise aus den Bewegungen des bewegbar gelagerten Bestandteils der Vorrichtung.

Ebenso kann die Einrichtung bzw. eine entsprechende Erfassungseinrichtung in der nicht-stationären Variante direkt oder indirekt an oder in einem stationären Bestandteil der Vorrichtung, wie z. B. einer Gehäusestruktur, einer Bauplattform, etc., angeordnet oder ausgebildet sein, wobei sie in wenigstens einem Bewegungsfreiheitsgrad bewegbar relativ zu dem stationären Bestandteil der Vorrichtung angeordnet oder ausgebildet ist. Bewegungen der Einrichtung bzw. der entsprechenden Erfassungseinrichtung ergeben sich hier typischerweise aus den (aktiven) Bewegungen der Einrichtung bzw. der Erfassungseinrichtung relativ zu dem stationären Bestandteil der Vorrichtung.

Ebenso kann die Einrichtung bzw. eine entsprechende Erfassungseinrichtung in der nicht-stationären Variante direkt oder indirekt an oder in einem nicht-stationären und damit bewegbar gelagerten Bestandteil der Vorrichtung, wie z. B. an oder in einem bewegbar gelagerten Arm einer Lagerungs- bzw. Robotereinrichtung oder an oder in der, wie erwähnt, bewegbar gelagerten Extrusionseinheit, angeordnet oder ausgebildet sein, wobei sie jedoch zusätzlich in wenigstens einem Bewegungsfreiheitsgrad bewegbar relativ zu dem nicht-stationären und damit bewegbar gelagerten Bestandteil der Vorrichtung angeordnet oder ausgebildet ist. Bewegungen der Einrichtung bzw. der entsprechenden Erfassungseinrichtung ergeben sich hier typischerweise aus den (aktiven) Bewegungen des bewegbar gelagerten Bestandteils der Vorrichtung und/oder aus den (aktiven) Bewegungen der Einrichtung bzw. der Erfassungseinrichtung relativ zu dem bewegbar gelagerten Bestandteil der Vorrichtung. Die Einrichtung bzw. die entsprechende Erfassungseinrichtung kann hier abhängig oder unabhängig von Bewegungen des bewegbar gelagerten Bestandteils der Vorrichtung relativ zu diesem bewegbar sein. Derart können kombinierte bzw. überlagerte Bewegungen der Einrichtung bzw. einer entsprechenden Erfassungseinrichtung realisiert sein bzw. werden, welche sich aus einer Kombination einer oder mehreren Bewegungen des bewegbar gelagerten Bestandteils der Vorrichtung, z. B. relativ zu einem Untergrund, und andererseits einer oder mehreren Bewegungen der an oder in dem jeweiligen bewegbar gelagerten Bestandteil der Vorrichtung bewegbar gelagerten Einrichtung bzw. der entsprechenden Erfassungseinrichtung, z. B. relativ zu dem bewegbar gelagerten Bestandteil der Vorrichtung, ergeben.

Mit anderen Worten kann die Einrichtung bzw. eine entsprechende Erfassungseinrichtung in allen nicht-stationären Varianten in wenigstens einem Bewegungsfreiheitsgrad bewegbar relativ zu einem stationären und damit nicht bewegbar gelagerten Bestandteil der Vorrichtung und/oder in wenigstens einem Bewegungsfreiheitsgrad relativ zu einem nicht-stationären und damit bewegbar gelagerten Bestandteil der Vorrichtung bewegbar gelagert sein. Bei entsprechenden Bewegungsfreiheitsgraden jeweiliger nicht-stationärer Bestandteile der Vorrichtung und der Einrichtung bzw. der entsprechenden Erfassungseinrichtung kann es sich um translatorische und/oder rotatorische Bewegungsfreiheitsgrad handeln. Grundsätzlich gilt, dass sich über entsprechende Bewegungen der Einrichtung bzw. der Erfassungseinrichtung sowohl Änderungen der Ausrichtung, insbesondere bei unveränderter Position, oder Änderungen der Position, insbesondere bei unveränderter Ausrichtung, der Einrichtung bzw. der entsprechenden Erfassungseinrichtung realisieren lassen.

Grundsätzlich gilt für die nicht-stationäre Variante, dass Bewegungen der Erfassungseinrichtung auf Grundlage von Steuerungsdaten, d. h. insbesondere Bewegungsdaten, der Extrusionseinheit durchgeführt werden können. Bewegungen der Erfassungseinrichtungen können sonach direkt oder indirekt Bewegungen der Extrusionseinheit, welche durch entsprechende Steuerungs- oder Bewegungsdaten beschrieben sind, folgen.

Alternativ oder ergänzend ist es jedoch möglich, dass Bewegungen der Erfassungseinrichtung auf Grundlage anderer Daten, d. h. z. B. auf Grundlage von Erfassungsdaten bestimmter chemischer und/oder physikalischer Parameter, wie z. B. einer gegebenenfalls veränderlichen Temperatur z. B. eines Untergrunds, einer z. B. durch ein Ausgasen eines Extrusionsmaterials veränderlichen chemischen Atmosphäre, etc., durchgeführt werden. In einem konkreten Beispiel kann die Erfassungseinrichtung sonach z. B. einem bestimmten erfassten Temperaturprofil folgend bewegt werden. Entsprechende Erfassungsdaten können durch die Erfassungseinrichtung oder dieser zugehörigen Erfassungselemente oder durch eine zu der Erfassungseinrichtung gesonderte Erfassungseinrichtung erfasst werden.

In der bereits erwähnten Ausführungsform, in welcher die Einrichtung bzw. eine entsprechende Erfassungseinrichtung an oder in der Extrusionseinheit angeordnet oder ausgebildet ist, kann die Einrichtung bzw. eine entsprechende Erfassungseinrichtung, d. h. insbesondere wenigstens ein der Erfassungseinrichtung zugehöriges Erfassungselement, im Bereich eines, insbesondere düsenartigen bzw. -förmigen, Austrittsbereichs der Extrusionseinheit angeordnet oder ausgebildet sein. Wie ebenso erwähnt, umfasst die Extrusionseinheit typischerweise eine Extruderkammer, eine in der Extruderkammer angeordnete Extruderschnecke und einen, insbesondere düsenartigen oder -förmigen, Austrittsbereich, über welchen vermittels der Extrusionseinheit aufgeschmolzenes Extrusionsmaterial auf einen Untergrund austragbar ist. Über eine derartige Anordnung oder Ausbildung der Einrichtung bzw. einer entsprechenden Erfassungseinrichtung im Bereich eines, insbesondere düsenartigen bzw. -förmigen, Austrittsbereichs der Extrusionseinheit lassen sich entsprechende Parameterinformationen unmittelbar im Bereich der Materialausbringung erfassen. Je nach konkreter Anordnung bzw. Ausrichtung der Einrichtung bzw. der entsprechenden Erfassungseinrichtung und je nach konkreter Bewegungsbahn der Extrusionseinheit lassen sich sonach z. B. vorlaufend und/oder nachlaufend zu einer vermittels der Extrusionseinheit auf einen Untergrund aufzubringenden bzw. aufgebrachten Material- bzw. Schmelzebahn bzw. eines auf einen Untergrund aufzubringenden bzw. zu einem vermittels der Einrichtung auf einen Untergrund aufgebrachten Material- bzw. Schmelzestrangs Parameterinformationen erfassen. Dies kann im Hinblick auf die erwähnte Prozessüberwachung und -auswertung sehr relevante und aussagekräftige Informationen liefern.

In diesem Zusammenhang kann die Einrichtung bzw. eine entsprechende Erfassungseinrichtung, d. h. insbesondere ein Erfassungselement, insbesondere in wenigstens einem translatorischen und/oder rotatorischen Bewegungsfreiheitsgrad relativ zu dem Austrittsbereich bewegbar im Bereich des Austrittsbereichs angeordnet oder ausgebildet sein. Translatorische Bewegungen der Einrichtung bzw. der entsprechenden Erfassungseinrichtung, d. h. insbesondere eines Erfassungselements, können insbesondere entlang einer durch die Extruderachse definierten Translationsachse oder einer winklig, d. h. insbesondere rechtwinklig, zu der Extruderachse ausgerichteten Translationsachse erfolgen. Rotatorische Bewegungen der Einrichtung bzw. der entsprechenden Erfassungseinrichtung, d. h. insbesondere eines Erfassungselements, können insbesondere um eine durch die Extruderachse definierte Rotationsachse oder eine winklig, d. h. insbesondere rechtwinklig, zu der Extruderachse ausgerichtete Rotationsachse erfolgen.

Über entsprechende Bewegungen der Einrichtung bzw. der entsprechenden Erfassungseinrichtung, d. h. insbesondere eines Erfassungselements, lassen sich Parameterinformationen z. B. vorlaufend und/oder nachlaufend zu einer vermittels der Extrusionseinheit auf einen Untergrund aufzubringenden bzw. aufgebrachten Material- bzw. Schmelzebahn bzw. eines auf einen Untergrund aufzubringenden bzw. zu einem vermittels der Einrichtung auf einen Untergrund aufgebrachten Material- bzw. Schmelzestrangs erfassen. Auch eine bezüglich einer Längserstreckung einer entsprechenden Material- bzw. Schmelzebahn bzw. eines entsprechenden Material- bzw. Schmelzestrangs seitliche Erfassung von Parameterinformationen ist denkbar. Mithin können Parameterinformationen, insbesondere auch gleichzeitig mit einer Bewegung der Extrusionseinheit entlang einer einem Querschnitt eines herzustellenden dreidimensionalen Objekts folgenden Bewegungsbahn, in welcher ein Material- bzw. Schmelzebahn bzw. ein Material- bzw. Schmelzestrang auf einen Untergrund aufgebracht wird, in einer oder mehreren Ausrichtungen und/oder Positionen um den Austrittsbereich der Extrusionseinheit erfasst werden, sodass im Hinblick auf die erwähnte Prozessüberwachung und - auswertung sehr relevante und aussagekräftige Informationen erhalten werden können.

Die Einrichtung bzw. eine entsprechende Erfassungseinrichtung kann, wie erwähnt, grundsätzlich mehrere Erfassungselemente umfassen. In einer Variante mit mehreren Erfassungselementen können diese unter Ausbildung einer, insbesondere ein Array bildenden, Erfassungselementanordnung angeordnet sein. Ein Array kann z. B. ein flächiges oder ringförmiges Gebilde sein. Derart kann ein, insbesondere flächiger oder ringartiger bzw. -förmiger, Erfassungsbereich definiert werden. In einem entsprechenden Erfassungsbereich können jeweilige Erfassungselemente jeweils zumindest einem Teilbereich zugeordnet sein, um in dem jeweiligen Teilbereich entsprechende Parameterinformationen zu erfassen.

Die bewegbare Lagerung der Einrichtung bzw. einer entsprechenden Erfassungseinrichtung kann in allen Ausführungsformen über wenigstens eine der Einrichtung bzw. der entsprechenden Erfassungseinrichtung direkt oder indirekt zuordenbare oder zugeordnete, insbesondere motorische, Antriebseinrichtung realisiert sein, welche zur Erzeugung einer die Einrichtung bzw. die entsprechende Erfassungseinrichtung in eine Bewegung in wenigstens einem Bewegungsfreiheitsgrad versetzenden Antriebskraft bzw. eines entsprechenden Antriebsmoments eingerichtet ist. Der Einrichtung bzw. einer entsprechenden Erfassungseinrichtung kann zudem eine Führungseinrichtung zuordenbar oder zugeordnet sein, welche ein oder mehrere Führungselemente umfasst, welche jeweils wenigstens eine Bewegungsbahn bzw. wenigstens einen Bewegungsfreiheitsgrad, entlang welcher bzw. in welchem die Einrichtung bzw. eine entsprechende Erfassungseinrichtung bewegbar ist, definieren.

An dieser Stelle ist allgemein anzumerken, dass die Einrichtung oder eine der Einrichtung zuordenbare oder zugeordnete hardware- und/oder softwaremäßig implementierte Plausibilisierungseinrichtung eingerichtet sein kann, z. B. von unterschiedlichen Erfassungselementen gelieferte, Parameterinformationen im Hinblick auf wenigstens ein Plausibilisierungskriterium zu überprüfen. Beispielsweise können z. B. von einem ersten Erfassungselement gelieferte Parameterinformationen, wie z. B. Temperaturinformationen, mit einem von einem weiteren Erfassungselement gelieferten Parameterinformationen, wie z. B. Temperaturinformationen, verglichen und das Vergleichsergebnis im Hinblick auf wenigstens ein Plausibilisierungskriterium, wie z. B. eine bestimmte absolute oder relative Abweichung, einen Referenzwert, etc., plausibilisiert werden. Eine entsprechende Plausibilisierungseinrichtung kann einen hardware- und/oder softwaremäßigen Bestandteil der Einrichtung bilden.

Grundsätzlich ist für Varianten einer Erfassungseinrichtung mit mehreren Erfassungselementen allgemein anzumerken, dass sich die Erfassungsbereiche der jeweiligen Erfassungselemente zumindest abschnittsweise, gegebenenfalls vollständig, überlappen können. Mithin können in einem entsprechenden Überlappungsbereich gegebenenfalls mehrere in ihrem Informationsgehalt gleiche, ähnliche oder unterschiedliche Parameterinformationen über mehrere, gegebenenfalls unterschiedliche, Erfassungselemente erfasst werden, sodass im Hinblick auf die erwähnte Prozessüberwachung und -auswertung sehr relevante und aussagekräftige Informationen erhalten werden können.

Weiter ist für Varianten einer Erfassungseinrichtung mit mehreren Erfassungselementen allgemein anzumerken, dass die Erfassungselemente entweder permanent betrieben oder, etwa um sicherzustellen, dass nur relevante Parameterinformationen erfasst werden, auf Grundlage wenigstens eines, z. B. statischen oder dynamischen, Ortskriteriums, d. h. z. B. nur dann, wenn sich ein oder mehrere Erfassungselemente in einer bestimmten Ausrichtung und/oder Position befinden, und/oder auf Grundlage wenigstens eines, z. B. statischen oder dynamischen, Zeitkriteriums, d. h. z. B. nur zu bestimmten Zeitpunkten, und/oder auf Grundlage eines statischen oder dynamischen Bewegungskriteriums der Extrusionseinheit, d. h. z. B. nur dann, wenn sich die Extrusionseinheit entlang einer Extrusionsmaterialbahn bewegt, betrieben werden können. Jeweilige Orts- und/oder Zeitkriterien können beispielsweise auf Grundlage von Baudaten eines jeweils herzustellenden dreidimensionalen Objekts bestimmt werden.

Die Einrichtung kann eingerichtet sein, ein oder mehrere ein ein- oder mehrdimensionales Abbild entsprechender Parameterinformationen beschreibende Bildinformationen zu erzeugen. Unter dem Begriff "Bildinformationen" sind nicht nur Bilddateien zu verstehen, vielmehr umfasst der Begriff grundsätzlich jedwede Datei bzw. jedweden Dateiinhalt, aus welcher bzw. welchem sich datenverarbeitungsmäßig direkt oder indirekte entsprechende ein- oder mehrdimensionale Abbilder entsprechender Parameterinformationen erstellen lassen. Die Einrichtung kann sonach eingerichtet sein, entsprechende Parameterinformationen und/oder entsprechende Orts- und/oder Zeitinformationen datenverarbeitungsmäßig zu einem ein- oder mehrdimensionalen Abbild eines vermittels der Vorrichtung durchführbaren oder durchgeführten Herstellungsprozesses und/oder eines vermittels der Vorrichtung herstellbaren oder hergestellten dreidimensionalen Objekts zu verarbeiten. Ein entsprechendes Abbild kann die erwähnte örtlich und/oder zeitlich aufgelöste Darstellung eines vermittels der Vorrichtung durchführbaren oder durchgeführten Herstellungsprozesses bzw. des Aufbaus eines vermittels der Vorrichtung herstellbaren oder hergestellten dreidimensionalen Objekts beinhalten, was die ebenfalls erwähnte örtlich und/oder zeitlich aufgelöste Rekonstruktion des Herstellungsprozesses bzw. des Aufbaus des dreidimensionalen Objekts ermöglichen kann.

Die Vorrichtung kann ferner wenigstens eine Ausgabeeinrichtung umfassen, welche zur Ausgabe einer entsprechenden Bildinformation an einem oder über ein Ausgabeelement eingerichtet ist. Unter dem Begriff "Ausgabe" ist dabei sowohl eine Darstellung einer entsprechenden Bildinformation an einem eine Darstellungsfläche umfassenden Ausgabeelement, wie z. B. einem Display, als auch die drahtgebundene oder drahtlose datenmäßige Übertragung einer entsprechenden Bildinformation über ein eine Datenübertragungsschnittstelle umfassendes Ausgabeelement bedeuten. Entsprechende Bildinformationen - gleiches gilt auch für entsprechende Parameterinformationen nebst diesen zugeordneten Orts- und/oder Zeitinformationen - können z. B. zum Zwecke der weiteren Auswertung bzw. Verarbeitung oder der bloßen Speicherung, etwa um eine Archivierung bzw. Dokumentation eines Herstellungsprozesses zu realisieren, an einen externen Kommunikationspartner, wie z. B. eine externe Datenverarbeitungseinrichtung und/oder einen externen Datenspeicher übertragen werden.

Die Einrichtung oder eine der Einrichtung zuordenbare oder zugeordnete hardware- und/oder softwaremäßige Vergleichseinrichtung kann eingerichtet sein, eine entsprechende Parameterinformationen mit wenigstens einer, insbesondere korrespondierenden, Referenzparameterinformation zu vergleichen und eine ein jeweiliges Vergleichsergebnis beschreibende Vergleichsinformation zu erzeugen. Über jeweilige Vergleichsinformationen lassen sich wiederum, insbesondere örtlich und/oder zeitlich aufgelöst, aussagekräftige Aussagen über die Qualität eines vermittels der Vorrichtung durchführbaren oder durchgeführten Herstellungsprozesses und/oder eines vermittels der Vorrichtung herzustellenden oder hergestellten dreidimensionalen Objekts tätigen, sodass im Hinblick auf die erwähnte Prozessüberwachung und -auswertung sehr relevante und aussagekräftige Informationen erhalten werden können.

Die Vorrichtung kann eine hardware- und/oder softwaremäßig implementierte Steuereinrichtung umfassen, welche zur Steuerung des Betriebs der Vorrichtung, insbesondere des Betriebs der Extrusionseinheit der Vorrichtung oder einer die Extrusionseinheit lagernden Lagerungseinrichtung der Vorrichtung, eingerichtet ist. Die Steuereinrichtung kann insbesondere zur Steuerung des Betriebs der Vorrichtung, insbesondere des Betriebs der Extrusionseinheit der Vorrichtung oder einer die Extrusionseinheit lagernden Lagerungseinrichtung der Vorrichtung, auf Grundlage einer entsprechenden Parameterinformation und/oder auf Grundlage einer entsprechenden Vergleichsinformation eingerichtet sein. Mithin können entsprechende Parameterinformationen bzw. Vergleichsinformationen der Steuerung des Betriebs der Vorrichtung, insbesondere der Extrusionseinheit der Vorrichtung oder einer die Extrusionseinheit lagernden Lagerungseinrichtung der Vorrichtung, zugrunde gelegt werden. Dies kann auch beinhalten, dass auf Grundlage entsprechender Parameterinformationen bzw. Vergleichsinformationen z. B. bestimmte Betriebsparameter der Vorrichtung, insbesondere in Echtzeit oder allgemein im Betrieb der Vorrichtung, zumindest zeitweise angepasst werden können, etwa um erkannte Abweichungen eines bestimmten Prozessparameters und/oder Objektparameters auszugleichen und/oder zu kompensieren. Gleichermaßen können Prozessparameter und/oder Objektparameter angepasst bzw. geändert werden, etwa um erkannte Abweichungen eines bestimmten Prozessparameters und/oder Objektparameters auszugleichen und/oder zu kompensieren. Konkret kann eine entsprechende Anpassung z. B. eine zumindest zeitweise Anpassung bzw. Änderung einer Bewegungsbahn der Extrusionseinheit oder einer die Extrusionseinheit lagernden Lagerungseinrichtung der Vorrichtung und/oder eine zumindest zeitweise Anpassung bzw. Änderung der Aufbring- oder Austragsmenge von Extrusionsmaterial auf einen Untergrund oder eine zumindest zeitweise Anpassung bzw. Änderung eines Bewegungsprofils, insbesondere einer Bewegungsbahn, einer Bewegungsgeschwindigkeit, etc., einer die Extrusionseinheit lagernden Lagerungseinrichtung der Vorrichtung beinhalten. Mithin können z. B. Bewegungen und/oder Aufbring- oder Austragsmenge der Extrusionseinheit im Betrieb auf Grundlage einer entsprechenden Parameterinformation und/oder auf Grundlage einer entsprechenden Vergleichsinformation im Betrieb der Vorrichtung, d. h. insbesondere während eines Bauvorgangs, in-situ angepasst werden.

Grundsätzlich gilt in diesem Zusammenhang, dass auf Grundlage einer entsprechenden Parameterinformation und/oder auf Grundlage einer entsprechenden Vergleichsinformation Steuerungsdaten für den Betrieb der Vorrichtung, d. h. insbesondere der Extrusionseinheit, angepasst oder sogar neu erzeugt werden.

Die Vorrichtung kann eine der Einrichtung, d. h. insbesondere einer entsprechenden Erfassungseinrichtung, weiter insbesondere wenigstens einem entsprechenden Erfassungselement, zugeordnete Temperiereinrichtung umfassen, welche zur Temperierung, insbesondere zur Kühlung, der Einrichtung eingerichtet ist. Durch die Möglichkeit der Temperierung der Einrichtung, d. h. insbesondere einer entsprechenden Erfassungseinrichtung, weiter insbesondere wenigstens einem entsprechenden Erfassungselement, kann ein bestimmungsgemäßer Betrieb der Einrichtung, d. h. insbesondere eine bestimmungsgemäße Erfassung entsprechender Parameterinformationen auch unter widrigen thermischen Bedingungen, d. h. insbesondere bei, z. B. prozessbedingt, hohen Temperaturen, gewährleistet werden. Zudem können thermisch bedingte Ausfälle oder Beschädigungen der Erfassungseinrichtung bzw. eines Erfassungselements vermieden werden. Eine entsprechende Temperiereinrichtung kann im Allgemeinen zu einer aktiven oder passiven Temperierung der Erfassungseinrichtung bzw. eines Erfassungselements eingerichtet sein.

Konkret kann eine entsprechende Temperiereinrichtung z. B. als eine, gegebenenfalls auch als Wärmeübertragereinrichtung bezeichenbare, Wärmetauschereinrichtung ausgebildet sein oder eine solche umfassen. Die Temperatureinrichtung kann sonach eingerichtet sein, z. B. über ein entlang der Erfassungseinrichtung respektive wenigstens eines Erfassungselements strömendes (erstes) Temperierfluid - hierbei kann es sich um ein Gas oder um eine Flüssigkeit handeln - , thermische Energie eines ersten Energieniveaus von der Erfassungseinrichtung aufzunehmen und diese auf eine Temperierstruktur, d. h. z. B. eine Kühlrippenstruktur, und/oder, gegebenenfalls unter Zwischenschaltung einer Wärmeübertragungsstruktur, auf ein weiteres Temperierfluid zu übertragen.

Die Wärmetauschereinrichtung kann wenigstens zwei Strömungskanalstrukturen umfassen. Eine von einem ersten Temperierfluid, d. h. z. B. einem Gas, durchströmbare bzw. durchströmte erste Strömungskanalstruktur kann sich z. B. durch ein erstes Raumvolumen erstrecken, in welchem die Einrichtung, d. h. insbesondere wenigstens ein Erfassungselement einer entsprechenden Erfassungseinrichtung, angeordnet oder ausgebildet ist. Eine von einem zweiten Temperierfluid, d. h. z. B. einer Flüssigkeit, durchströmbare bzw. durchströmte zweite Strömungskanalstruktur kann sich durch ein von dem ersten Raumvolumen durch eine Wärmeübertragungsstruktur, insbesondere eine Wandstruktur, getrenntes zweites Raumvolumen erstrecken. Das zweite Raumvolumen kann z. B. durch nutartige Ausnehmungen gebildet sein, welche durch wenigstens ein, z. B. plattenartiges bzw. -förmiges, Abschluss- bzw. Deckelelement, an welchem ein oder mehrere Ab- und/oder Zuführelemente zum Ab- und/oder Zuführen eines Temperierfluids angeordnet oder ausgebildet sein können, abgedeckt sind. Diese Konfiguration der Wärmetauschereinrichtung mit wenigstens zwei gesonderten, jedoch thermisch koppelbaren bzw. gekoppelten Strömungskanalstrukturen ermöglicht ein effizientes Abführen von thermischer Energie und damit ein effizientes Kühlen jeweiliger Erfassungselemente.

Jeweiligen Strömungskanalstrukturen können ein oder mehrere Strömungserzeugungseinrichtungen, d. h. z. B. Gebläse- und/oder Pumpeneinrichtungen, zugeordnet sein, welche ein Fördern des jeweiligen Temperierfluids durch die den jeweiligen Strömungskanalstrukturen zugehörigen Raumvolumina ermöglichen. Der Betrieb jeweiliger Strömungserzeugungseinrichtungen kann auf Grundlage von von einem Temperatursensor erzeugten Temperaturinformationen gesteuert bzw. geregelt werden.

Das erste Raumvolumen kann ein, z. B. kammerartiges bzw. -förmiges, erstes Raumvolumen einer Gehäusebaugruppe einer entsprechenden Erfassungseinrichtung sein, an oder in welcher wenigstens ein entsprechendes Erfassungselement angeordnet oder ausgebildet ist. Das ebenso z. B. kammerartige bzw. -förmige zweite Raumvolumen kann ein zweites Raumvolumen einer entsprechenden Gehäusebaugruppe sein, welches durch eine als Wärmeübertragungsstruktur dienende Wandstruktur von dem ersten Raumvolumen getrennt ist, sodass zwar eine Übertragung von thermischer Energie, jedoch keine Möglichkeit der Vermischung der die jeweiligen Raumvolumina durchströmenden Temperierfluide gegeben ist.

Eine entsprechende Gehäusebaugruppe kann zudem ein mit dem von dem ersten Temperierfluid durchströmbaren bzw. durchströmten ersten Raumvolumen, z. B. durch wenigstens eine Öffnung, kommunizierendes, ebenso z. B. kammerartiges bzw. -förmiges, drittes Raumvolumen umfassen. In dem dritten Raumvolumen kann wenigstens eine Temperierstruktur, d. h. z. B. eine Kühlrippenstruktur, angeordnet oder ausgebildet sein, welche über die bzw. eine als Wärmeübertragungsstruktur dienende Wandstruktur mit dem von dem zweiten Temperierfluid durchströmbaren bzw. durchströmten zweiten Raumvolumen thermisch gekoppelt ist. Diese Konfiguration kann die Effizienz der Übertragung thermischer Energie erhöhen.

Die vorstehenden Ausführungen gelten insbesondere im Zusammenhang mit einer Ausführungsform, in welcher die Einrichtung bzw. die Erfassungseinrichtung an oder in einem nicht-stationären und damit bewegbar gelagerten Bestandteil der Vorrichtung, wie z. B. an oder in einem bewegbar gelagerten Arm der bzw. einer Robotereinrichtung oder an oder in der bewegbar gelagerten Extrusionseinheit, d. h. insbesondere im Bereich des Austrittsbereichs der Extrusionseinheit, angeordnet oder ausgebildet sind.

Aus vorstehenden Ausführungen ergibt sich, dass die Einrichtung bzw. die Erfassungseinrichtung im Allgemeinen an oder in einer wenigstens ein kammerartiges Raumvolumen begrenzenden Gehäusebaugruppe angeordnet oder ausgebildet sein kann. Eine entsprechende Gehäusebaugruppe kann an einem bewegbar gelagerten Bestandteil der Vorrichtung, wie z. B. an oder in einem bewegbar gelagerten Arm der bzw. einer Robotereinrichtung oder an oder in der bewegbar gelagerten Extrusionseinheit, d. h. insbesondere im Bereich des Austrittsbereichs der Extrusionseinheit, angeordnet oder ausgebildet sein. Eine entsprechende Gehäusebaugruppe kann eine Öffnung aufweisen, welche von der Extrusionseinheit durchsetzbar bzw. durchsetzt ist oder durch welche, z. B. wenn die Extrusionseinheit oberhalb der Gehäusebaugruppe angeordnet ist, ein auf einen Untergrund aufzubringendes Extrusionsmaterial treten kann.

Es wurde erwähnt, dass ein Erfassungselement in wenigstens einem translatorischen und/oder rotatorischen Bewegungsfreiheitsgrad relativ zu dem Austrittsbereich bewegbar im Bereich des Austrittsbereichs angeordnet oder ausgebildet sein kann. Rotatorische Bewegungen eines Erfassungselements können, wie ebenso erwähnt, auch um eine rechtwinklig und damit quer zu der Extruderachse ausgerichtete Rotationsachse erfolgen. Wenigstens ein Erfassungselement kann entsprechend z. B. schwenkbar gelagert sein, was es ermöglicht, den Erfassungsbereich des Erfassungselements unmittelbar auf den bzw. einen Bereich unterhalb des Austrittsbereichs der Extrusionseinheit auszurichten, um Parameterinformationen in diesem Bereich zu erfassen.

Gleichermaßen ist es jedoch unabhängig von der Möglichkeit der Bewegung entsprechender Erfassungselemente in einem oder mehreren Bewegungsfreiheitsgrade denkbar, dass die Erfassungselemente mit einem jeweiligen Erfassungsbereich angeordnet bzw. ausgerichtet sind, welcher auf den bzw. einen Bereich unterhalb des Austrittsbereichs der Extrusionseinheit ausgerichtet ist. Der Erfassungsbereich jeweiliger Erfassungselemente ist sonach insbesondere auf einen Bereich unterhalb des Austrittsbereichs der Extrusionseinheit ausrichtbar oder ausgerichtet. Derart lassen sich Parameterinformationen in diesem Bereich besonders gut erfassen.

Ein zweiter Aspekt der Erfindung betrifft ein Verfahren zur extrusionsbasierten Herstellung wenigstens eines dreidimensionalen Objekts. Das Verfahren umfasst die folgenden Schritte: Erfassung wenigstens einer einen Prozessparameter eines vermittels der Vorrichtung durchführbaren oder durchgeführten extrusionsbasierten Herstellungsprozesses und/oder einen Objektparameter eines vermittels der Vorrichtung herzustellenden oder hergestellten dreidimensionalen Objekts betreffenden Parameterinformation, sowie Erzeugung einer einen Erfassungsort und/oder eine Erfassungszeit einer entsprechenden Parameterinformation Objektinformation beschreibenden Orts- und/oder Zeitinformation eingerichtet ist.

Sämtliche Ausführungen im Zusammenhang mit der Vorrichtung gemäß dem ersten Aspekt der Erfindung gelten analog für das Verfahren gemäß dem zweiten Aspekt der Erfindung.

Das Verfahren kann sonach z. B. den Schritt des Steuerns des Betriebs der Vorrichtung, d. h. insbesondere der Extrusionseinheit der Vorrichtung oder einer die Extrusionseinheit lagernden Lagerungs- bzw. Robotereinrichtung der Vorrichtung, auf Grundlage einer entsprechenden Parameterinformation und/oder auf Grundlage einer entsprechenden Vergleichsinformation, umfassen.

Die Erfindung ist anhand von Ausführungsbeispielen in den Zeichnungen nochmals erläutert. Dabei zeigen:
Fig. 1 - 5 jeweils Prinzipdarstellungen einer Vorrichtung zur extrusionsbasierten Herstellung eines dreidimensionalen Objekts gemäß verschiedenen Ausführungsbeispielen; und
Fig. 6 - 10 jeweils Prinzipdarstellungen einer Gehäusebaugruppe einer Vorrichtung gemäß einem Ausführungsbeispiel.

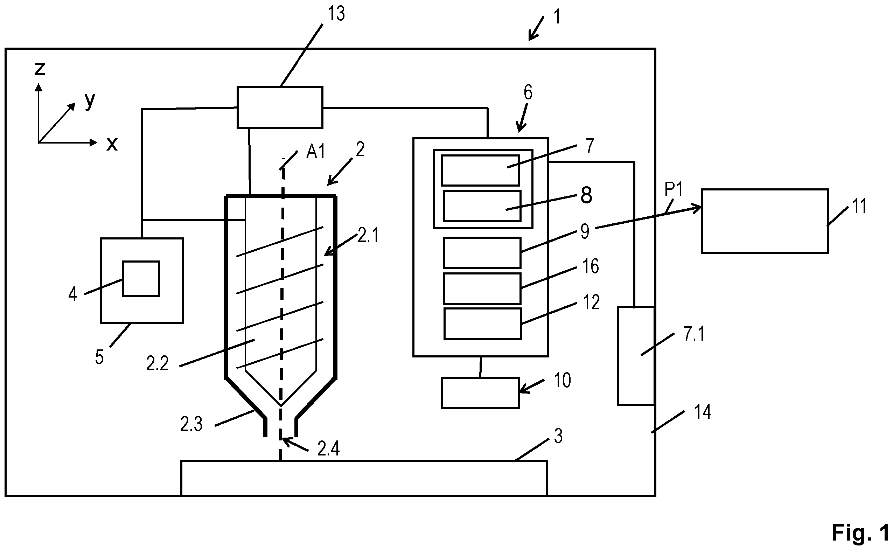

Fig. 1 zeigt eine Prinzipdarstellung einer Vorrichtung 1 zur extrusionsbasierten Herstellung eines dreidimensionalen Objekts (nicht gezeigt) gemäß einem Ausführungsbeispiel.

Die Vorrichtung 1 ist sonach zur extrusionsbasierten Herstellung wenigstens eines dreidimensionalen Objekts, d. h. insbesondere zur extrusionsbasierten Herstellung wenigstens eines dreidimensionalen Objekts über einen zumindest abschnittsweisen, gegebenenfalls vollständigen, lagen- bzw. schichtweisen extrusionsbasierten Aufbau eines entsprechenden dreidimensionalen Objekts, eingerichtet. Die extrusionsbasierte Herstellung eines entsprechenden dreidimensionalen Objekts kann vermittels der Vorrichtung 1 sonach zumindest abschnittsweise, gegebenenfalls vollständig, lagen- bzw. schichtweise erfolgen. Die Vorrichtung 1 ist entsprechend zur extrusionsbasierten Verarbeitung wenigstens eines Extrusionsmaterials, d. h. zur Extrusion wenigstens eines Extrusionsmaterials auf einen Untergrund, eingerichtet. Unter einem Extrusionsmaterial ist typischerweise ein extrudierbares bzw. extrusionsfähiges Kunststoffmaterial zu verstehen.

Die Vorrichtung 1 umfasst eine Extrusionseinheit 2, welche zum Aufschmelzen bzw. Plastifizieren eines entsprechenden Extrusionsmaterials und zum, insbesondere bahnförmigen bzw. strangförmigen, Aufbringen eines aufgeschmolzenen Extrusionsmaterials auf einen Untergrund, wie z. B. eine Bauplattform 3 oder ein Objekt, oder auf eine bereits auf einen Untergrund aufgebrachte Lage bzw. Schicht, worunter gegebenenfalls auch nur eine einzelne Materialbahn bzw. ein einzelner Materialstrang zu verstehen sein kann, des oder eines Extrusionsmaterials, eingerichtet ist. Die Extrusionseinheit 2 ist insbesondere eingerichtet, ein aufgeschmolzenes Extrusionsmaterial kontinuierlich oder quasi-kontinuierlich, d. h. z. B. in einer kontinuierlichen oder quasi-kontinuierlichen Material- bzw. Schmelzebahn bzw. in einem kontinuierlichen oder quasi-kontinuierlichen Material- bzw. Schmelzestrang, auf einen Untergrund aufzubringen.

Die Extrusionseinheit 2 ist in wenigstens einem translatorischen und/oder rotatorischen Bewegungsfreiheitsgrad relativ zu einem Untergrund bewegbar gelagert sein. Beispielhafte translatorische Bewegungsfreiheitsgrade der Extrusionseinheit 2 sind translatorische Bewegungen entlang einer oder mehrerer Achsen des in Fig. 1 gezeigten Koordinatensystems, beispielhafte rotatorische Bewegungsfreiheitsgrade der Extrusionseinheit 2 Rotationsachsen sind rotatorische Bewegungen um eine oder mehrere der Achsen des in Fig. 1 gezeigten Koordinatensystems.

Wie in Fig. 1 angedeutet, kann der Extrusionseinheit 2 eine, insbesondere motorische, Antriebseinrichtung zugeordnet sein, über welche sich eine die Extrusionseinheit 2 in eine translatorische und/oder rotatorische Bewegung entlang einer relativ zu einem Untergrund versetzende Antriebskraft bzw. ein entsprechendes Antriebsmoment erzeugen lässt. Die Antriebseinrichtung 4 bildet in dem in den Fig. gezeigten Ausführungsbeispiel einen Bestandteil einer Lagerungseinrichtung 5, welche zur bewegbaren Lagerung der Extrusionseinheit 2 in wenigstens einem translatorischen und/oder rotatorischen Bewegungsfreiheitsgrad relativ zu einem Untergrund eingerichtet ist, sein. Die in den Fig. rein schematisch dargestellte Lagerungseinrichtung 5 kann z. B. als eine ein- oder mehrachsige Robotereinrichtung ausgebildet sein oder eine solche umfassen.

Wie in Fig. 1 angedeutet, umfasst die Extrusionseinheit 2 eine durch eine oder mehrere Extruderkammerwandungen begrenzte bzw. definierte Extruderkammer 2.1, eine in der Extruderkammer 2.1 angeordnete, eine Extruderachse A1 definierende Extruderschnecke 2.2 sowie einen, insbesondere düsenartigen bzw. -förmigen, Austrittsbereich 2.3, über welchen vermittels der Extrusionseinheit 2 in der Extruderkammer 2.1 aufgeschmolzenes Extrusionsmaterial auf einen Untergrund austragbar ist. Der Austrittsbereich 2.3 umfasst eine, insbesondere düsenartige bzw. -förmige, Austrittsöffnung 2.4, über welche vermittels der Extrusionseinheit 2 aufgeschmolzenes Extrusionsmaterial auf einen Untergrund austragbar ist.

Die Extruderkammer 2.1 kann unterschiedlich funktionalisierte Bereiche bzw. Zonen, wie z. B. einen Befüllbereich, in welchem ein Befüllen der Extruderkammer 2.2 mit aufzuschmelzendem Extrusionsmaterial erfolgt, einen Aufschmelzbereich, in welchem das Aufschmelzen des in die Extruderkammer 2.1 gefüllten aufzuschmelzenden Extrusionsmaterials erfolgt, sowie den bereits erwähnten Austrittsbereich 2.3, über welchen vermittels der Extrusionseinheit 2 aufgeschmolzenes Extrusionsmaterial auf einen Untergrund austragbar ist, aufweisen.

Die vorgenannten Bestandteile der Extrusionseinheit 2 können unter Ausbildung einer Extrusionsbaugruppe miteinander koppelbar bzw. im Betrieb der Extrusionseinheit miteinander gekoppelt sein.

Die Vorrichtung 1 umfasst ferner eine hardware- und/oder softwaremäßig implementierte Einrichtung 6, welche zur Erfassung einer einen Prozessparameter eines vermittels der Vorrichtung 1 durchführbaren oder durchgeführten extrusionsbasierten Herstellungsprozesses und/oder einen Objektparameter eines vermittels der Vorrichtung 1 herzustellenden oder hergestellten dreidimensionalen Objekts betreffenden Parameterinformation, sowie zur Erzeugung einer einen Erfassungsort und/oder eine Erfassungszeit einer entsprechenden Parameterinformation beschreibenden Orts- und/oder Zeitinformation eingerichtet ist.

Vermittels der Einrichtung 6 lassen sich sonach Parameterinformationen erfassen, welche Prozessparameter eines vermittels der Vorrichtung 1 durchführbaren oder durchgeführten extrusionsbasierten Herstellungsprozesses, d. h. im Allgemeinen Parameter, welche einen vermittels der Vorrichtung 1 durchführbaren oder durchgeführten extrusionsbasierten Herstellungsprozess direkt oder indirekt beschreiben, und/oder welche Objektparameter eines vermittels der Vorrichtung 1 durchführbaren oder durchgeführten extrusionsbasierten Herstellungsprozesses herzustellenden oder hergestellten dreidimensionalen Objekts, d. h. im Allgemeinen Parameter, welche ein vermittels der Vorrichtung 1 herzustellendes oder hergestelltes dreidimensionales Objekt direkt oder indirekt beschreiben, betreffen. Vermittels entsprechenden Parameterinformationen - bei diesen kann es sich z. B. um datenverarbeitungsmäßig verarbeitbare Daten handeln - können sonach sowohl Herstellungsprozesse, welche vermittels der Vorrichtung 1 durchführbar bzw. durchgeführt sind, als auch dreidimensionale Objekte, welche über einen vermittels der Vorrichtung 1 durchführbaren oder durchgeführten Herstellungsprozess herzustellen oder hergestellt sind, zumindest teilweise, gegebenenfalls vollständig, beschrieben werden.

Entsprechende vermittels der Einrichtung 6 erfassbaren Prozessparameter können z. B. folgende Prozessparameter betreffen:
Ein Prozessparameter kann wenigstens einen chemischen und/oder wenigstens physikalischen Parameter eines Prozessraums, in welchem ein vermittels der Vorrichtung 1 durchführbarer oder durchgeführter extrusionsbasierter Herstellungsprozess erfolgt, beschreiben. Ein entsprechender chemischer Parameter eines Prozessraums kann insbesondere eine chemische Zusammensetzung einer innerhalb des Prozessraums herrschenden Atmosphäre, insbesondere einer Gasatmosphäre, sein. Ein entsprechender chemischer Paramater kann auch ein Gradient einer innerhalb des Prozessraums herrschenden Atmosphäre, insbesondere einer Gasatmosphäre, sein. Ein entsprechender physikalischer Parameter eines Prozessraums kann insbesondere ein innerhalb des Prozessraums herrschender Druck oder eine innerhalb des Prozessraums herrschende Temperatur sein. Ein entsprechender physikalischer Paramater kann auch ein Gradient eines innerhalb des Prozessraums herrschenden Drucks oder einer innerhalb des Prozessraums herrschenden Temperatur sein.

Alternativ oder ergänzend kann ein entsprechender Prozessparameter wenigstens einen chemischen und/oder geometrischen und/oder physikalischen Parameter wenigstens eines im Rahmen eines vermittels der Vorrichtung 1 durchführbaren oder durchgeführten extrusionsbasierten Herstellungsprozesses verwendbaren oder verwendeten Extrusionsmaterials beschreiben. Ein entsprechender chemischer Parameter eines Extrusionsmaterials kann insbesondere eine chemische Zusammensetzung eines Extrusionsmaterials sein. Ein entsprechender chemischer Paramater kann auch ein Gradient einer chemischen Zusammensetzung eines Extrusionsmaterials sein. Ein entsprechender geometrischer Parameter eines Extrusionsmaterials, insbesondere einer auf einen Untergrund aufgetragenen Extrusionsmaterialbahn, kann insbesondere eine Abmessung, insbesondere eine Höhe, Länge, Breite, und/oder eine Form, insbesondere eine Querschnittsform, eines Extrusionsmaterials, insbesondere einer auf einen Untergrund aufgetragenen Material- bzw. Schmelzebahn bzw. eines auf einen Untergrund aufgetragenen Material- bzw. Schmelzestrangs, sein. Ein entsprechender geometrischer Parameter kann auch ein Gradient einer Abmessung, insbesondere einer Höhe, Länge, Breite, und/oder einer Form, insbesondere einer Querschnittsform, eines Extrusionsmaterials, insbesondere einer auf einen Untergrund aufgetragenen Material- bzw. Schmelzebahn bzw. eines auf einen Untergrund aufgetragenen Material- bzw. Schmelzestrangs, sein. Ein entsprechender physikalischer Parameter eines Extrusionsmaterials kann insbesondere eine Dichte, eine Festigkeit, eine Temperatur, eine Oberflächenbeschaffenheit oder eine Viskosität eines Extrusionsmaterials sein. Ein entsprechender physikalischer Paramater kann auch ein Gradient einer Dichte, einer Festigkeit, einer Temperatur, einer Oberflächenbeschaffenheit oder einer Viskosität eines Extrusionsmaterials sein.

Alternativ oder ergänzend kann ein entsprechender Prozessparameter einen Parameter, insbesondere einen, gegebenenfalls örtlichen und/oder zeitlichen, Bewegungsparameter, einer Bewegungsbahn der Extrusionseinheit 2 und/oder einer über die Extrusionseinheit 2 auf einen Untergrund aufgebrachten Material- bzw. Schmelzebahn bzw. eines auf einen Untergrund aufgetragenen Material- bzw. Schmelzestrangs, beschreiben.

Alternativ oder ergänzend kann ein entsprechender Prozessparameter einen Parameter eines Untergrunds, wie z. B. der Bauplattform 3, beschreiben. Ein entsprechender Parameter eines Untergrunds kann insbesondere eine Temperatur, eine Oberflächenbeschaffenheit, eines Untergrunds sein. Ein entsprechender Paramater kann auch ein Gradient einer Temperatur oder einer Oberflächenbeschaffenheit eines Untergrunds sein.

Entsprechende vermittels der Einrichtung 6 erfassbare Objektparameter können z. B. folgende Objektparameter betreffen:
Ein entsprechender Objektparameter kann wenigstens einen chemischen und/oder geometrischen und/oder wenigstens physikalischen Parameter, eines vermittels der Vorrichtung 1 herzustellenden oder hergestellten dreidimensionalen Objekts oder Objektabschnitts beschreiben. Ein entsprechender chemischer Parameter kann insbesondere eine chemische Zusammensetzung eines vermittels der Vorrichtung 1 herzustellenden oder hergestellten dreidimensionalen Objekts oder Objektabschnitts sein. Ein entsprechender chemischer Parameter kann auch ein Gradient einer chemischen Zusammensetzung eines vermittels der Vorrichtung 1 herzustellenden oder hergestellten dreidimensionalen Objekts oder Objektabschnitts sein. Ein entsprechender geometrischer Parameter kann insbesondere eine Abmessung, insbesondere eine Höhe, Länge, Breite, und/oder Form, insbesondere eine Querschnittsform, eines vermittels der Vorrichtung 1 herzustellenden oder hergestellten dreidimensionalen Objekts oder Objektabschnitts sein. Ein entsprechender geometrischer Parameter kann auch ein Gradient einer Abmessung, insbesondere einer Höhe, Länge, Breite, und/oder einer Form, insbesondere einer Querschnittsform, eines vermittels der Vorrichtung 1 herzustellenden oder hergestellten dreidimensionalen Objekts oder Objektabschnitts sein. Ein entsprechender physikalischer Parameter kann insbesondere eine Dichte, eine Masse, eine Oberflächenbeschaffenheit, eine Festigkeit, eines vermittels der Vorrichtung 1 herzustellenden oder hergestellten dreidimensionalen Objekts oder Objektabschnitts sein. Ein entsprechender physikalischer Parameter kann auch ein Gradient einer Dichte, einer Masse, einer Oberflächenbeschaffenheit oder einer Festigkeit eines vermittels der Vorrichtung 1 herzustellenden oder hergestellten dreidimensionalen Objekts oder Objektabschnitts sein.

Die Einrichtung 6 ist, wie erwähnt, neben der Erfassung entsprechender Parameterinformationen auch zur Erzeugung von Orts- und/oder Zeitinformationen, wie z. B. Orts- und/oder Zeitkoordinaten, eingerichtet, welche einen Erfassungsort und/oder eine Erfassungszeit einer entsprechenden Parameterinformation beschreiben. Die Einrichtung ist 6 insbesondere auch zur Zuordnung einer einen Erfassungsort und/oder eine Erfassungszeit einer entsprechenden Parameterinformation beschreibenden Orts- und/oder Zeitinformation zu einer jeweiligen Parameterinformation eingerichtet. Vermittels der Einrichtung 6 lassen sich sonach entsprechende beschreibenden Orts- und/oder Zeitinformation zu jeweiligen erfassten Parameterinformationen erzeugen und diesen zuordnen. Jede Parameterinformation kann sonach datenverarbeitungsmäßig mit einem "Orts- und/oder Zeitstempel" versehen werden, über welche sich erkennen lässt, an welchem Ort und/oder zu welcher Zeit die jeweilige Parameterinformation erfasst wurde. Der Ort kann über Parameter, wie z. B. Koordinaten, beschrieben werden, welche eine eindeutige Position des Ortes in einem Raumvolumen, d. h. insbesondere in einem Bauvolumen der Vorrichtung 1, definieren.

Die Einrichtung 6 kann sonach einerseits eine hardware- und/oder softwaremäßig implementierte Erfassungseinrichtung 7 umfassen, welche eingerichtet ist, Parameterinformationen zu erfassen, und andererseits eine hardware- und/oder softwaremäßig implementierte Zuordnungseinrichtung 8 umfassen, welche eingerichtet ist, einer entsprechenden Parameterinformation eine Orts- und/oder Zeitinformation zuzuordnen, welche einen jeweiligen Erfassungsort und/oder eine Erfassungszeit einer entsprechenden Parameterinformation beschreibt.

Vermittels der Einrichtung 6 lässt sich sonach eine aussagekräftige Prozessüberwachung und - auswertung realisieren, welche sowohl entsprechende Prozessparamater als auch entsprechende Objektparameter berücksichtigen kann, sodass ein örtlich und/oder zeitlich aufgelöstes datenmäßiges Abbild eines vermittels der Vorrichtung 1 durchführbaren oder durchgeführten Herstellungsprozess als auch ein örtlich und/oder zeitlich aufgelöstes datenmäßiges Abbild eines über einen vermittels der Vorrichtung 1 durchführbaren oder durchgeführten Herstellungsprozess herzustellenden oder hergestellten dreidimensionalen Objekts erhalten werden kann. Insbesondere die Möglichkeit der Erzeugung bzw. Zuordnung entsprechender Orts- und/oder Zeitinformation zu jeweiligen Parameterinformationen liefert ein aussagekräftiges Abbild eines Herstellungsprozesses bzw. des (sukzessiven) Aufbaus eines dreidimensionalen Objekts, da sich, gegebenenfalls in Echt-Zeit, der Herstellungsprozess bzw. der (sukzessive) Aufbau eines dreidimensionalen Objekts örtlich und/oder zeitlich aufgelöst rekonstruieren lässt.

Die Erfassungseinrichtung 7 kann ein oder mehrere zur Erfassung einer Parameterinformation eingerichtete Erfassungselemente 7.1 umfassen. Die Erfassungseinrichtung 7 kann insbesondere als Sensoreinrichtung ausgebildet sein, sodass die Erfassungselemente 7.1 jeweils als Sensorelemente ausgebildet sein können.

Konkret kann die Erfassungseinrichtung 7 z. B. als eine akustische und/oder optische und/oder thermische Erfassungseinrichtung ausgebildet sein, welche wenigstens ein Erfassungs- bzw. Sensorelement zur akustischen und/oder optischen und/oder thermischen Erfassung einer Parameterinformation umfasst. Die Erfassungseinrichtung 7 kann sonach insbesondere als akustische und/oder optische und/oder thermische Sensoreinrichtung ausgebildet sein, welche ein akustisches und/oder optisches und/oder thermisches Sensorelement umfasst. Ein akustisches Erfassungs- bzw. Sensorelement kann z. B. ein Schallelement, insbesondere ein Ultraschallsensorelement, sein, ein optisches Erfassungs- bzw. Sensorelement kann z. B. ein Bilderfassungselement, wie z. B. ein CCD-Sensorelement, ein Pixelsensorelement, etc. sein, ein thermisches Erfassungs- bzw. Sensorelement kann z. B. ein Temperaturerfassungselement, wie z. B. ein Infrarotsensorelement sein. Grundsätzlich können alle Erfassungs- bzw. Sensorelemente verwendet werden, welche eine Erfassung entsprechender Parameterinformation ermöglichen.

Selbstverständlich kann die Einrichtung 6 oder die Erfassungseinrichtung 7 oder eine der Erfassungseinrichtung 7 optional zugeordnete hardware- und/oder softwaremäßig implementierte Auswerteeinrichtung 9 eingerichtet sein, auf Grundlage der von jeweiligen Erfassungs- bzw.

Sensorelementen gelieferten Signale, entsprechende Parameterinformationen zu erzeugen. Eine entsprechende Auswerteeinrichtung 9 kann, sofern vorhanden, einen hardware- und/oder softwaremäßigen Bestandteil der Einrichtung 6 bilden.

Die Einrichtung 6 oder eine der Einrichtung 6 optional zuordenbare oder zugeordnete hardware- und/oder softwaremäßig implementierte Plausibilisierungseinrichtung 16 kann ferner eingerichtet sein, z. B. von unterschiedlichen Erfassungselementen 7.1 der Erfassungseinrichtung 7 gelieferte, Parameterinformationen im Hinblick auf wenigstens ein Plausibilisierungskriterium zu überprüfen. Beispielsweise können z. B. von einem ersten Erfassungselement 7.1 gelieferte Parameterinformationen, wie z. B. Temperaturinformationen, mit von einem weiteren Erfassungselement 7.1 gelieferten Parameterinformationen, wie z. B. Temperaturinformationen, verglichen und das Vergleichsergebnis im Hinblick auf wenigstens ein Plausibilisierungskriterium, wie z. B. eine bestimmte absolute oder relative Abweichung, einen Referenzwert, etc., plausibilisiert werden. Eine entsprechende Plausibilisierungseinrichtung 16 kann, sofern vorhanden, einen hardware- und/oder softwaremäßigen Bestandteil der Einrichtung 6 bilden.

Die Einrichtung 6 kann eingerichtet sein, eine oder mehrere ein ein- oder mehrdimensionales Abbild entsprechender Parameterinformationen beschreibende Bildinformationen zu erzeugen. Die Einrichtung 6 kann sonach eingerichtet sein, entsprechende Parameterinformationen und/oder entsprechende Orts- und/oder Zeitinformationen datenverarbeitungsmäßig zu einem ein- oder mehrdimensionalen Abbild eines vermittels der Vorrichtung 1 durchführbare oder durchgeführten Herstellungsprozesses und/oder eines vermittels der Vorrichtung herstellbaren oder hergestellten dreidimensionalen Objekts zu verarbeiten. Ein entsprechendes Abbild kann die erwähnte örtlich und/oder zeitlich aufgelöste Darstellung eines Herstellungsprozesses bzw. des Aufbaus eines dreidimensionalen Objekts beinhalten, was die ebenfalls erwähnte örtlich und/oder zeitlich aufgelöste Rekonstruktion des Herstellungsprozesses bzw. des Aufbaus des dreidimensionalen Objekts ermöglichen kann.

Die Vorrichtung 1 kann ferner wenigstens eine Ausgabeeinrichtung 10 umfassen, welche zur Ausgabe entsprechender Bildinformationen an einem oder über ein Ausgabeelement eingerichtet ist. Unter dem Begriff "Ausgabe" ist dabei sowohl eine Darstellung entsprechender Bildinformationen an einem eine Darstellungsfläche umfassenden Ausgabeelement, wie z. B. einem Display, als auch die drahtgebundene oder drahtlose datenmäßige Übertragung entsprechender Bildinformationen über ein eine Datenübertragungsschnittstelle umfassendes Ausgabeelement bedeuten. Entsprechende Bildinformationen - gleiches gilt auch für entsprechende Parameterinformationen nebst diesen zugeordneten Orts- und/oder Zeitinformationen - können, wie durch den Pfeil P1 angedeutet, z. B. zum Zwecke der weiteren Auswertung bzw. Verarbeitung oder der bloßen Speicherung, etwa um eine Archivierung bzw. Dokumentation eines vermittels der Vorrichtung 1 durchgeführten Herstellungsprozesses zu realisieren, drahtgenunden oder drahtlos an einen externen Kommunikationspartner 11, wie z. B. eine externe Datenverarbeitungseinrichtung und/oder einen externen Datenspeicher übertragen werden. Zur Datenübertragung entsprechender Informationen kann die Vorrichtung 1 eine nicht gezeigte Datenübertragungseinrichtung umfassen.

Die Einrichtung 6 oder eine der Einrichtung 6 zuordenbare oder zugeordnete hardware- und/oder softwaremäßige Vergleichseinrichtung 12 kann ferner eingerichtet sein, entsprechende Parameterinformationen mit wenigstens einer, insbesondere korrespondierenden, Referenzparameterinformation zu vergleichen und eine ein jeweiliges Vergleichsergebnis beschreibende Vergleichsinformation zu erzeugen. Über jeweilige Vergleichsinformationen lassen sich wiederum, insbesondere örtlich und/oder zeitlich aufgelöst, aussagekräftige Aussagen über die Qualität eines vermittels der Vorrichtung 1 durchführbaren oder durchgeführten Herstellungsprozesses und/oder eines vermittels der Vorrichtung 1 herzustellenden oder hergestellten dreidimensionalen Objekts tätigen, sodass im Hinblick auf die erwähnte Prozessüberwachung und -auswertung sehr relevante und aussagekräftige Informationen erhalten werden können.

Die Vorrichtung 1 kann eine hardware- und/oder softwaremäßig implementierte Steuereinrichtung 13 umfassen, welche zur Steuerung des Betriebs der Vorrichtung 1, insbesondere des Betriebs der Extrusionseinheit 2 oder der die Extrusionseinheit 2 lagernden Lagerungseinrichtung 5, eingerichtet ist. Die Steuereinrichtung 13 kann insbesondere zur Steuerung des Betriebs der Vorrichtung 1, insbesondere des Betriebs der Extrusionseinheit 2 oder der die Extrusionseinheit 2 lagernden Lagerungseinrichtung 5, auf Grundlage einer entsprechenden Parameterinformation und/oder auf Grundlage einer entsprechenden Vergleichsinformation eingerichtet sein. Mithin können entsprechende Parameterinformationen bzw. Vergleichsinformationen der Steuerung des Betriebs der Vorrichtung 1, insbesondere der Extrusionseinheit 2 oder der die Extrusionseinheit 2 lagernden Lagerungseinrichtung, zugrunde gelegt werden. Dies kann auch beinhalten, dass auf Grundlage entsprechender Parameterinformationen bzw. Vergleichsinformationen z. B. bestimmte Betriebsparameter der Vorrichtung 1, insbesondere in Echtzeit, zumindest zeitweise angepasst werden können, etwa um erkannte Abweichungen eines bestimmten Prozessparameters und/oder Objektparameters auszugleichen und/oder zu kompensieren. Gleichermaßen können Prozessparameter und/oder Objektparameter angepasst bzw. geändert werden, etwa um erkannte Abweichungen eines bestimmten Prozessparameters und/oder Objektparameters auszugleichen und/oder zu kompensieren. Konkret kann eine entsprechende Anpassung z. B. eine zumindest zeitweise Anpassung bzw. Änderung einer Bewegungsbahn der Extrusionseinheit 2 oder der die Extrusionseinheit 2 lagernden Lagerungseinrichtung 5 oder eine zumindest zeitweise Anpassung bzw. Änderung der Aufbring- oder Austragsmenge von Extrusionsmaterial auf einen Untergrund oder eine zumindest zeitweise Anpassung bzw. Änderung eines Bewegungsprofils, insbesondere einer Bewegungsbahn, einer Bewegungsgeschwindigkeit, etc., der die Extrusionseinheit 2 lagernden Lagerungseinrichtung 5 beinhalten.

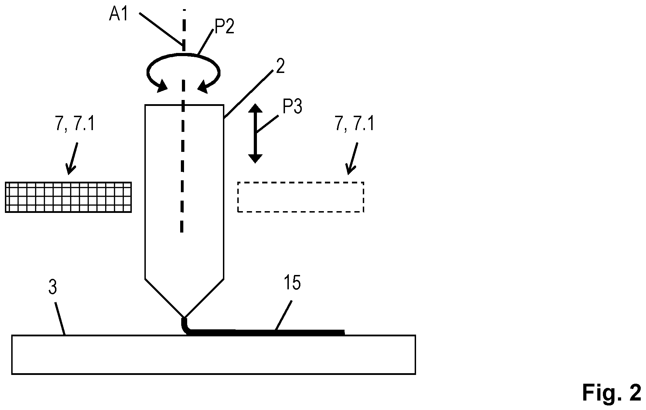

Hinsichtlich der Anordnung der Einrichtung 6, d. h. insbesondere der Erfassungseinrichtung 7, bestehen grundsätzlich zwei unterschiedliche Möglichkeiten, welche nachfolgend auch unter Bezugnahme auf die in den Fig. 2 - 5 gezeigten Ausführungsbeispiele näher erläutert werden. Die Einrichtung 6 bzw. die Erfassungseinrichtung 7 kann - wie in dem in Fig. 1 gezeigten Ausführungsbeispiel dargestellt - entweder stationär und damit unbewegbar bzw. lage- bzw. ortsfest oder - wie in den in den Fig. 2 - 5 gezeigten Ausführungsbeispielen dargestellt - nicht stationär und damit bewegbar bzw. nicht lage- bzw. ortsfest angeordnet sein.

In der in Fig. 1 gezeigten stationären Variante kann die Einrichtung 6 bzw. die Erfassungseinrichtung 7 direkt oder indirekt an einem stationären Bestandteil der Vorrichtung 1, wie z. B. einer Gehäusestruktur 14, der Bauplattform 3, etc., angeordnet oder ausgebildet sein.

In der in den Fig. 2 - 5 gezeigten nicht-stationären Variante kann die Einrichtung 6 bzw. die Erfassungseinrichtung 7 direkt oder indirekt an einem nicht-stationären und damit einem bewegbar gelagerten Bestandteil der Vorrichtung, wie z. B. an oder in einem bewegbar gelagerten Arm der bzw. einer Robotereinrichtung oder an oder in der, wie erwähnt, bewegbar gelagerten Extrusionseinheit 2, angeordnet oder ausgebildet sein, wobei sie selbst nicht (aktiv) relativ zu dem nicht-stationären Bestandteil der Vorrichtung 1 bewegbar gelagert ist. Bewegungen der Einrichtung 6 bzw. der Erfassungseinrichtung 7 ergeben sich hier typischerweise aus den Bewegungen des bewegbar gelagerten Bestandteils der Vorrichtung 1.

Ebenso kann die Einrichtung 6 bzw. die Erfassungseinrichtung 7 in der nicht-stationären Variante direkt oder indirekt an oder in einem stationären Bestandteil der Vorrichtung 1, wie z. B. der Gehäusestruktur 14, der Bauplattform 3, etc., angeordnet oder ausgebildet sein, wobei sie in wenigstens einem Bewegungsfreiheitsgrad bewegbar relativ zu dem stationären Bestandteil der Vorrichtung 1 angeordnet oder ausgebildet ist. Bewegungen der Einrichtung 6 bzw. der Erfassungseinrichtung 7 ergeben sich hier typischerweise aus den (aktiven) Bewegungen der Einrichtung 6 bzw. der Erfassungseinrichtung 7 relativ zu dem stationären Bestandteil der Vorrichtung 1.

Ebenso kann - wie die Fig. 2 - 5 jeweils beispielhaft zeigen - die Einrichtung 6 bzw. die Erfassungseinrichtung 7 in der nicht-stationären Variante an oder in einem nicht-stationären und damit bewegbar gelagerten Bestandteil der Vorrichtung 1, wie z. B. an oder in einem bewegbar gelagerten Arm der bzw. einer Robotereinrichtung oder - wie die Fig. 2 - 5 jeweils beispielhaft zeigen - an oder in der bewegbar gelagerten Extrusionseinheit 2, d. h. insbesondere im Bereich des Austrittsbereichs 2.3 der Extrusionseinheit 2, angeordnet oder ausgebildet sein.

Grundsätzlich gilt für die nicht-stationäre Variante, dass Bewegungen der Erfassungseinrichtung 7 auf Grundlage von Steuerungsdaten, d. h. insbesondere Bewegungsdaten, der Extrusionseinheit 2 durchgeführt werden können. Bewegungen der Erfassungseinrichtung 7 können sonach direkt oder indirekt Bewegungen der Extrusionseinheit 2, welche durch entsprechende Steuerungs- oder Bewegungsdaten beschrieben sind, folgen.

Alternativ oder ergänzend ist es jedoch möglich, dass Bewegungen der Erfassungseinrichtung 6 auf Grundlage anderer Daten, d. h. z. B. auf Grundlage von Erfassungsdaten bestimmter chemischer und/oder physikalischer Parameter, wie z. B. einer gegebenenfalls veränderlichen Temperatur z. B. eines Untergrunds, einer z. B. durch ein Ausgasen eines Extrusionsmaterials veränderlichen chemischen Atmosphäre, etc., durchgeführt werden. Die Erfassungseinrichtung 7 kann sonach z. B. einem bestimmten erfassten Temperaturprofil folgend bewegt werden. Entsprechende Erfassungsdaten können durch die Erfassungseinrichtung 7 oder dieser zugehörigen Erfassungselemente 7.1 oder durch eine zu der Erfassungseinrichtung 7 gesonderte Erfassungseinrichtung (nicht gezeigt) erfasst werden.

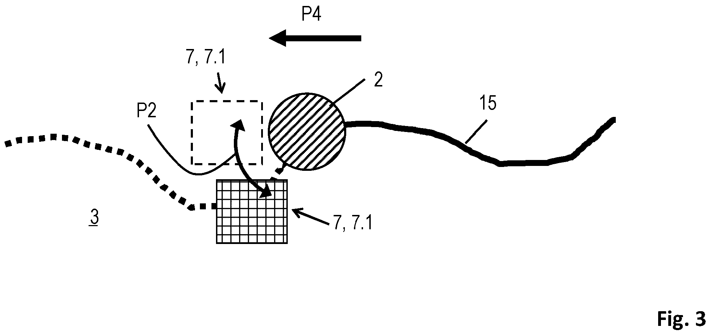

Das in den Fig. 2, 3 gezeigte Ausführungsbeispiel, wobei Fig. 2 eine Seitenansicht und Fig. 3 eine Aufsicht zeigt, zeigt konkret, dass die Erfassungseinrichtung 7 bzw. ein Erfassungselement 7.1 zusätzlich in wenigstens einem Bewegungsfreiheitsgrad bewegbar relativ zu der selbst bewegbar gelagerten Extrusionseinheit 2 angeordnet oder ausgebildet sein kann. Bewegungen der Erfassungseinrichtung 7 bzw. des Erfassungselements 7.1 können sich hier aus den (aktiven) Bewegungen der Extrusionseinheit 2 und/oder aus den (aktiven) Bewegungen der Erfassungseinrichtung 7 bzw. des Erfassungselements 7.1 relativ zu der Extrusionseinheit 2 ergeben. Die Erfassungseinrichtung 7 bzw. das Erfassungselement 7.1 kann hier abhängig oder unabhängig von Bewegungen der Extrusionseinheit 2 relativ zu dieser bewegbar sein. Derart können kombinierte bzw. überlagerte Bewegungen der Erfassungseinrichtung 7 bzw. des Erfassungselements 7 realisiert sein bzw. werden, welche sich aus einer Kombination einer oder mehreren Bewegungen der Extrusionseinheit 2, z. B. relativ zu einem Untergrund, und andererseits einer oder mehreren Bewegungen der an oder in der Extrusionseinheit 2 bewegbar gelagerten Erfassungseinrichtung 7 bzw. des Erfassungselements 7.1, z. B. relativ zu der Extrusionseinheit 2, ergeben.

Für alle entsprechenden Ausführungsbeispiele gilt, dass es sich bei entsprechenden Bewegungsfreiheitsgraden jeweiliger nicht-stationärer Bestandteile der Vorrichtung 1 und der Erfassungseinrichtung 7 bzw. des Erfassungselements 7.1, wie in Fig. 2 durch die Doppelpfeile P2 und P3 angedeutet, um translatorische und/oder rotatorische Bewegungsfreiheitsgrade handeln kann. Translatorische Bewegungen der Erfassungseinrichtung 7 bzw. des Erfassungselements 7.1 können wie durch Doppelpfeil P3 angedeutet, insbesondere entlang einer durch die Extruderachse A2 definierten Translationsachse oder einer winklig, d. h. insbesondere rechtwinklig, zu der Extruderachse A1 ausgerichteten Translationsachse erfolgen. Rotatorische Bewegungen der Erfassungseinrichtung 7 bzw. des Erfassungselements 7.1 können, wie durch den Doppelpfeil P2 angedeutet, insbesondere um eine durch die Extruderachse A1 definierte Rotationsachse oder eine winklig, d. h. insbesondere rechtwinklig, zu der Extruderachse A1 ausgerichtete Rotationsachse erfolgen. Grundsätzlich gilt sonach, dass sich über entsprechende Bewegungen der der Erfassungseinrichtung 7 bzw. des Erfassungselements 7.1 sowohl Änderungen der Ausrichtung, insbesondere bei unveränderter Position, oder Änderungen der Position, insbesondere bei unveränderter Ausrichtung, der Erfassungseinrichtung 7 bzw. des Erfassungselements 7.1 realisieren lassen.

Der Vollständigkeit halber sei angemerkt, dass in den Fig. 2 - 5 eine entsprechende Schmelzebahn bzw. ein entsprechender Schmelzestrangs 15 dargestellt ist. Zudem ist in Fig. 3 durch den Pfeil P4 eine beispielhafte Bewegungsrichtung der Extrusionseinheit 2 dargestellt; der gestrichelte Abschnitt der Schmelzebahn bzw. des Schmelzestrangs 15 stellt sonach einen künftigen Auftrag von Extrusionsmaterial auf einen Untergrund, wie z. B. die Bauplattform 3, dar.

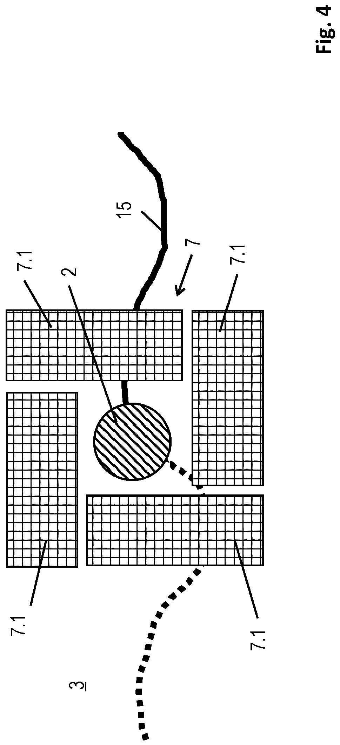

Anhand des in Fig. 4 gezeigten Ausführungsbeispiels ist ersichtlich, dass die Erfassungseinrichtung 7, wie erwähnt, mehrere Erfassungselemente 7.1 umfassen kann. In dem in Fig. 4 gezeigten Ausführungsbeispiel sind die Erfassungselemente 7.1 können unter Ausbildung einer, insbesondere ein Array bildenden, Erfassungselementanordnung angeordnet. Das Array ist in dem in Fig. 4 gezeigten Ausführungsbeispiel ein flächiges Gebilde, welches beispielhaft aus vier Erfassungselementen 7.1 besteht. Die rechteckige Form der Erfassungselemente 7.1 ist ebenso beispielhaft zu verstehen. Durch eine entsprechende Erfassungselementanordnung kann ein insbesondere ringartiger Erfassungsbereich definiert werden. Dabei können jeweilige Erfassungselemente 7.1 jeweils zumindest einem Teilbereich zugeordnet sein, um in dem jeweiligen Teilbereich entsprechende Parameterinformationen zu erfassen.

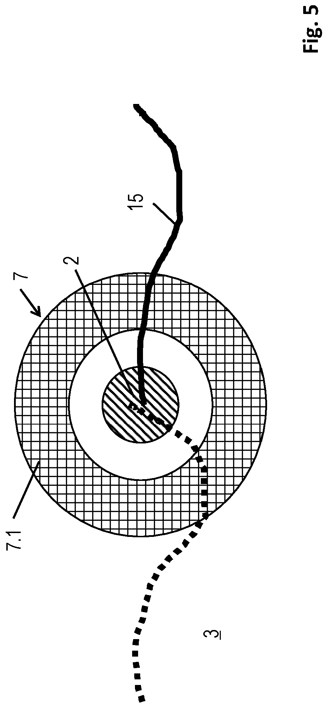

Anhand des in Fig. 5 gezeigten Ausführungsbeispiels ist ersichtlich, dass ein oder mehrere Erfassungselemente 7.1 auch ein Array in Form eines ringförmigen Gebildes bilden können. Durch eine entsprechende Erfassungselementanordnung kann ein insbesondere ringförmiger Erfassungsbereich definiert werden. Dabei können jeweilige Erfassungselemente 7.1 wiederum jeweils zumindest einem Teilbereich zugeordnet sein, um in dem jeweiligen Teilbereich entsprechende Parameterinformationen zu erfassen.

Anhand der in den Fig. 2 - 5 gezeigten Ausführungsbeispiele ist sonach ersichtlich, dass sich je nach konkreter Anordnung bzw. Ausrichtung der Erfassungseinrichtung 7 bzw. jeweiliger Erfassungselemente 7.1 und je nach konkreter Bewegungsbahn der Extrusionseinheit 2 z. B. vorlaufend und/oder nachlaufend zu einer vermittels der Extrusionseinheit 2 auf einen Untergrund aufzubringenden bzw. aufgebrachten Material- bzw. Schmelzebahn bzw. eines auf einen Untergrund aufzubringenden Material- bzw. Schmelzestrangs 15 Parameterinformationen erfassen. Dies kann im Hinblick auf die erwähnte Prozessüberwachung und -auswertung sehr relevante und aussagekräftige Informationen liefern.

Über eine entsprechend konfigurierte Erfassungseinrichtung 7 lassen sich sonach Parameterinformationen z. B. vorlaufend und/oder nachlaufend zu einer vermittels der Extrusionseinheit 2 auf einen Untergrund aufzubringenden bzw. aufgebrachten Material- bzw. Schmelzebahn bzw. eines auf einen Untergrund aufzubringenden Material- bzw. Schmelzestrangs 15 erfassen. Auch eine bezüglich einer Längserstreckung einer entsprechenden Material- bzw. Schmelzebahn bzw. eines entsprechenden Material- bzw. Schmelzestrangs 15 seitliche Erfassung von Parameterinformationen ist denkbar.

Parameterinformationen können dabei, insbesondere auch gleichzeitig mit einer Bewegung der Extrusionseinheit 2 entlang einer einem Querschnitt eines herzustellenden dreidimensionalen Objekts folgenden Bewegungsbahn der Extrusionseinheit 2, in welcher ein Material- bzw. Schmelzebahn bzw. ein Material- bzw. Schmelzestrang 15 auf einen Untergrund aufgebracht wird, in einer oder mehreren Ausrichtungen und/oder Positionen um die Extrusionseinheit 2 bzw. den Austrittsbereich 2.3 der Extrusionseinheit 2 erfasst werden, sodass im Hinblick auf die erwähnte Prozessüberwachung und -auswertung sehr relevante und aussagekräftige Informationen erhalten werden können.

Die bewegbare Lagerung der Erfassungseinrichtung 7 kann in allen Ausführungsbeispielen über wenigstens eine der Erfassungseinrichtung 7 direkt oder indirekt zuordenbare oder zugeordnete, insbesondere motorische, Antriebseinrichtung (nicht gezeigt) realisiert sein, welche zur Erzeugung einer die die Erfassungseinrichtung 7 in eine Bewegung in wenigstens einem Bewegungsfreiheitsgrad versetzenden Antriebskraft bzw. eines entsprechenden Antriebsmoments eingerichtet ist. Der Erfassungseinrichtung 7 kann zudem eine Führungseinrichtung (nicht gezeigt) zuordenbar oder zugeordnet sein, welche ein oder mehrere Führungselemente umfasst, welche jeweils wenigstens eine Bewegungsbahn bzw. wenigstens einen Bewegungsfreiheitsgrad, entlang welcher bzw. in welchem die Erfassungseinrichtung 7 bewegbar ist, definieren.

Grundsätzlich ist für Ausführungsbeispiele der Erfassungseinrichtung 7 mit mehreren Erfassungselementen 7.1 allgemein anzumerken, dass sich die Erfassungsbereiche der jeweiligen Erfassungselemente 7.1 zumindest abschnittsweise, gegebenenfalls vollständig, überlappen können. Mithin können in einem entsprechenden Überlappungsbereich gegebenenfalls mehrere in ihrem Informationsgehalt gleiche, ähnliche oder unterschiedliche Parameterinformationen über mehrere, gegebenenfalls unterschiedliche, Erfassungselemente 7.1 erfasst werden, sodass im Hinblick auf die erwähnte Prozessüberwachung und -auswertung sehr relevante und aussagekräftige Informationen erhalten werden können.

Weiter ist für Ausführungsbeispiele der Erfassungseinrichtung 7 mit mehreren Erfassungselementen 7.1 allgemein anzumerken, dass die Erfassungselemente 7.1 entweder permanent betrieben oder, etwa um sicherzustellen, dass nur relevante Parameterinformationen erfasst werden, auf Grundlage wenigstens eines, z. B. statischen oder dynamischen, Ortskriteriums, d. h. z. B. nur dann, wenn sich ein oder mehrere Erfassungselemente 7.1 in einer bestimmten Ausrichtung und/oder Position befinden, und/oder auf Grundlage wenigstens eines, z. B. statischen oder dynamischen, Zeitkriteriums, d. h. z. B. nur zu bestimmten Zeitpunkten, und/oder auf Grundlage eines statischen oder dynamischen Bewegungskriteriums der Extrusionseinheit 2, d. h. z. B. nur dann, wenn sich die Extrusionseinheit 2 entlang einer Extrusionsmaterialbahn bewegt, betrieben werden können. Jeweilige Orts- und/oder Zeitkriterien können beispielsweise auf Grundlage von Baudaten eines jeweils herzustellenden dreidimensionalen Objekts bestimmt werden.

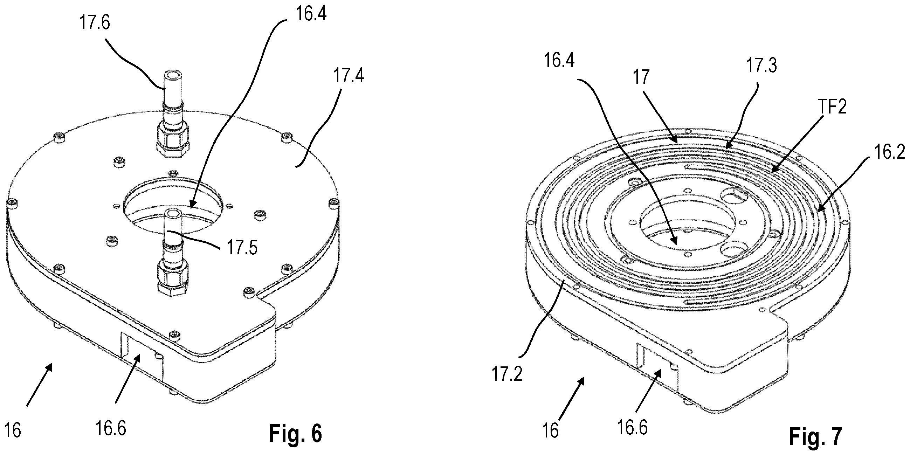

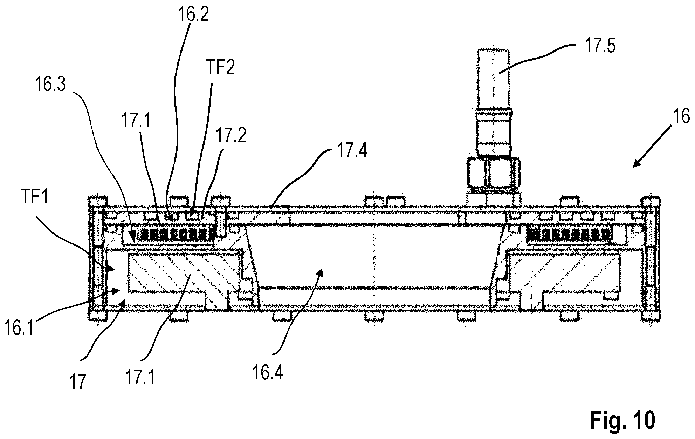

Die Fig. 6 bis 10 zeigen jeweils eine Prinzipdarstellung einer Gehäusebaugruppe 16 einer Vorrichtung 1 gemäß einem Ausführungsbeispiel. Dabei zeigen die Fig. 6 - 9 jeweils verschiedene horizontal geschnittene Ansichten und Fig. 10 eine quergeschnittene Ansicht der Gehäusebaugruppe 16, welche einen Einblick in das Innere der Gehäusebaugruppe 16 ermöglichen.

Anhand der Fig. 6 - 10 ist sonach zunächst ersichtlich, dass die Vorrichtung 1 eine Gehäusebaugruppe 16 umfassen kann, an oder in welcher Funktionskomponenten der bzw. einer Erfassungseinrichtung 7 angeordnet oder ausgebildet sein können. Die Gehäusebaugruppe 16 begrenzt hierzu ein oder mehrere kammerartige Raumvolumen 16.1 - 16.3. Die Gehäusebaugruppe 16 kann an einem bewegbar gelagerten Bestandteil der Vorrichtung 1, wie z. B. an oder in einem bewegbar gelagerten Arm der bzw. einer Robotereinrichtung oder an oder in der bewegbar gelagerten Extrusionseinheit 2, d. h. insbesondere im Bereich des Austrittsbereichs der Extrusionseinheit 2, angeordnet oder ausgebildet sein.

Anhand der Fig. 6 - 10 ist ersichtlich, dass die Gehäusebaugruppe 16 eine Öffnung 16.4 aufweisen kann, welche von der Extrusionseinheit 2 durchsetzbar bzw. durchsetzt ist oder durch welche, z. B. wenn die Extrusionseinheit 2 oberhalb der Gehäusebaugruppe 16 angeordnet ist, ein auf einen Untergrund aufzubringendes Baumaterial treten kann.

Anhand der Fig. 6 - 10 ist ferner ersichtlich, dass die Vorrichtung 1 eine der Erfassungseinrichtung 7, d. h. insbesondere den der Erfassungseinrichtung 7 zugehörigen Erfassungselementen 7.1 zugeordnete Temperiereinrichtung 17 umfassen kann, welche zur Temperierung, d. h. insbesondere zur Kühlung, der Erfassungseinrichtung 7 bzw. der Erfassungselemente 7.1 eingerichtet ist. Durch die Möglichkeit der Temperierung der Erfassungselemente 7.1 kann ein bestimmungsgemäßer Betrieb der Erfassungseinrichtung 7, d. h. insbesondere eine bestimmungsgemäße Erfassung entsprechender Parameterinformationen, auch unter widrigen thermischen Bedingungen, d. h. insbesondere bei hohen Temperaturen, gewährleistet werden. Zudem können thermisch bedingte Ausfälle oder Beschädigungen der Erfassungselemente 7.1 vermieden werden.

In dem in den Fig. 6 - 10 gezeigten Ausführungsbeispiel ist die Temperiereinrichtung 17 als eine auch als Wärmeübertragereinrichtung bezeichenbare Wärmetauschereinrichtung ausgebildet. Die Temperatureinrichtung 17 ist sonach eingerichtet, z. B. über ein entlang der Erfassungselemente 7.1 strömendes erstes Temperierfluid TF1 - hierbei kann es sich z. B. um ein Gas, wie z. B. Luft, handeln -, thermische Energie eines ersten Energieniveaus von den Erfassungselementen 7.1 aufzunehmen und diese auf z. B. als Kühlrippenstrukturen ausgebildete Temperierstrukturen 17.1, und zudem unter Zwischenschaltung einer zwischenwandartigen bzw. -förmigen Wärmeübertragungsstruktur 17.2, auf ein zweites Temperierfluid TF2, d. h. z. B. eine Flüssigkeit, wie z. B. Öl, Wasser, etc., zu übertragen.

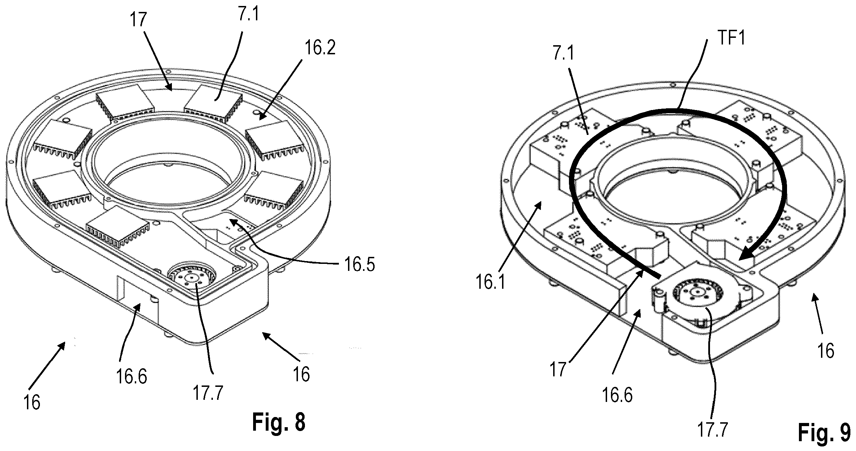

Die Wärmetauschereinrichtung 17 umfasst in dem - Ausführungsbeispiel zwei Strömungskanalstrukturen. Eine in Fig. 9 erkennbare, von dem ersten Temperierfluid TF1 durchströmbare bzw. durchströmte erste Strömungskanalstruktur erstreckt sich durch ein erstes Raumvolumen 16.1, in welchem die Erfassungselemente 7.1 angeordnet oder ausgebildet ist. Eine von dem zweiten Temperierfluid TF2 durchströmbare bzw. durchströmte zweite Strömungskanalstruktur erstreckt sich durch eine von dem ersten Raumvolumen 16.1 durch die Wärmeübertragungsstruktur 17.2 getrenntes zweites Raumvolumen 16.2. Anhand der Fig. 6, 7 ist ersichtlich, dass das zweite Raumvolumen 16.2 z. B. durch nutartige Ausnehmungen 17.3 gebildet sein kann, welche oberseitig durch ein plattenartiges bzw. -förmiges Abschluss- bzw. Deckelelement 17.4, an welchem ein oder mehrere Abführelemente 17.5 und/oder Zuführelemente 17.6 zum Ab- und/oder Zuführen des zweiten Temperierfluids TF2 angeordnet oder ausgebildet sein können, abgedeckt sind. Diese Konfiguration der Wärmetauschereinrichtung 17 mit zwei gesonderten, jedoch thermisch koppelbaren bzw. gekoppelten Strömungskanalstrukturen ermöglicht ein effizientes Abführen von thermischer Energie und damit ein effizientes Kühlen der Erfassungselemente 7.1.

Jeweiligen Strömungskanalstrukturen können ein oder mehrere Strömungserzeugungseinrichtungen 17.7, d. h. z. B. Gebläse- und/oder Pumpeneinrichtungen, zugeordnet sein, welche ein Fördern des jeweiligen Temperierfluids TF1, TF2 durch die den jeweiligen Strömungskanalstrukturen zugehörigen Raumvolumina 16.1 - 16.3 ermöglichen. Eine entsprechende Strömungserzeugungseinrichtung 17.7 - beispielhaft als Gebläseeinrichtung konfiguriert - ist in Fig. 9 beispielhaft für die von dem ersten Temperierfluid TF1 durchströmbare Strömungskanalstruktur gezeigt.

Anhand der Fig. 9, 10 ist nochmals ersichtlich, dass das erste Raumvolumen 16.1 ein kammerartiges bzw. -förmiges Raumvolumen der Gehäusebaugruppe 16 sein kann, an oder in welcher die Erfassungselemente 7.1 angeordnet oder ausgebildet sein können. Das, wie Fig. 10 zeigt, ebenso kammerartige bzw. -förmige zweite Raumvolumen 16.2 kann ein Raumvolumen der Gehäusebaugruppe 16 sein, welches, wie erwähnt, durch die als Wärmeübertragungsstruktur 17.2 dienende Wandstruktur von dem ersten Raumvolumen 16.1 getrennt ist, sodass zwar eine Übertragung von thermischer Energie, jedoch keine Möglichkeit der Vermischung der die jeweiligen Raumvolumina 16.1, 16.2 durchströmenden Temperierfluide TF1, TF2 gegeben ist.

In dem Ausführungsbeispiel umfasst die Gehäusebaugruppe 16 zudem ein mit dem von dem ersten Temperierfluid TF1 durchströmbaren bzw. durchströmten ersten Raumvolumen 16.1 durch eine in Fig. 8 erkennbare Öffnung 16.5 kommunizierendes, kammerartiges bzw. -förmiges drittes Raumvolumen 16.3. In dem dritten Raumvolumen 16.3 sind die erwähnten Temperierstrukturen 17.1 angeordnet, welche über die Wärmeübertragungsstruktur 17.2 mit dem von dem zweiten Temperierfluid TF2 durchströmbaren bzw. durchströmten zweiten Raumvolumen 16.2 thermisch gekoppelt sind.

Im Zusammenhang mit den Fig. 6 - 9 ist weiter anzumerken, dass die Gehäusebaugruppe 16 optional eine Anschlussöffnung 16.6 aufweisen kann, über welche sich z. B. ein den Erfassungselementen 7.1 zugeordnetes Daten- und/oder Versorgungskabel (nicht gezeigt) anschließen lässt.

Im Zusammenhang mit allen Ausführungsbeispielen sei nochmals erwähnt, dass ein oder mehrere Erfassungselemente 7.1 in wenigstens einem translatorischen und/oder rotatorischen Bewegungsfreiheitsgrad relativ zu dem Austrittsbereich der Extrusionseinheit 2 bewegbar im Bereich des Austrittsbereichs angeordnet oder ausgebildet sein können. Entsprechende rotatorische Bewegungen können, wie ebenso erwähnt, auch um eine rechtwinklig und damit quer zu der Extruderachse ausgerichtete Rotationsachse erfolgen, sodass ein oder mehrere Erfassungselemente 7.1 schwenkbar gelagert sein können, was es ermöglicht, den Erfassungsbereich der jeweiligen Erfassungselemente 7.1 unmittelbar auf den bzw. einen Bereich unterhalb des Austrittsbereichs der Extrusionseinheit 2 auszurichten, um Parameterinformationen in diesem Bereich zu erfassen.

Gleichermaßen ist es jedoch denkbar, dass die Erfassungselemente 7.1 mit einem jeweiligen Erfassungsbereich angeordnet bzw. ausgerichtet sind, welcher auf den bzw. einen Bereich unterhalb des Austrittsbereichs der Extrusionseinheit 2 ausgerichtet ist.

Mit den in den Fig. gezeigten Ausführungsbeispielen lässt sich ein Verfahren zur extrusionsbasierten Herstellung wenigstens eines dreidimensionalen Objekts implementieren. Das Verfahren umfasst die folgenden Schritte: Erfassung wenigstens einer einen Prozessparameter eines vermittels der Vorrichtung 1 durchführbaren oder durchgeführten extrusionsbasierten Herstellungsprozesses und/oder einen Objektparameter eines vermittels der Vorrichtung 1 herzustellenden oder hergestellten dreidimensionalen Objekts betreffenden Parameterinformation, sowie Erzeugung einer einen Erfassungsort und/oder eine Erfassungszeit einer entsprechenden Parameterinformation Objektinformation beschreibenden Orts- und/oder Zeitinformation. Einzelne, mehrere oder sämtliche im Zusammenhang mit einem bestimmten Ausführungsbeispiel beschriebene Merkmale lassen sich mit einzelnen, mehreren oder sämtlichen im Zusammenhang mit wenigstens einem anderen Ausführungsbeispiel beschriebenen Merkmalen kombinieren.

Bestimmte Merkmale der Erfindung sind in den folgenden Aspekten beispielhaft dargestellt:
1. Vorrichtung (1) zur extrusionsbasierten Herstellung wenigstens eines dreidimensionalen Objekts, umfassend wenigstens eine Extrusionseinheit (2), welche zum Aufschmelzen eines Extrusionsmaterials und/oder zum Aufbringen eines aufgeschmolzenen Extrusionsmaterials auf einen Untergrund eingerichtet ist, umfassend eine Einrichtung (6), welche zur Erfassung einer einen Prozessparameter eines vermittels der Vorrichtung durchführbaren oder durchgeführten extrusionsbasierten Herstellungsprozesses und/oder einen Objektparameter eines vermittels der Vorrichtung (1) herzustellenden oder hergestellten dreidimensionalen Objekts betreffenden Parameterinformation sowie zur Erzeugung einer einen Erfassungsort und/oder eine Erfassungszeit einer entsprechenden Parameterinformation beschreibenden Orts- und/oder Zeitinformation eingerichtet ist.
2. Vorrichtung nach Aspekt 1, wobei die Einrichtung (6) eine Erfassungseinrichtung (7) umfasst, welche wenigstens ein Erfassungselement (7.1), welches zur Erfassung einer Parameterinformation eingerichtet ist, umfasst.
3. Vorrichtung nach Aspekt 2, wobei die Erfassungseinrichtung (7) eine akustische oder optische oder thermische Erfassungseinrichtung ist, welche wenigstens ein Erfassungselement (7.1) zur akustischen oder optischen oder thermischen Erfassung einer Parameterinformation umfasst.
4. Vorrichtung nach einem der vorhergehenden Aspekte, wobei die Einrichtung (6), insbesondere die Erfassungseinrichtung (7), in wenigstens einem Bewegungsfreiheitsgrad, insbesondere relativ zu dem oder einem Untergrund, bewegbar gelagert ist.
5. Vorrichtung nach einem der vorhergehenden Aspekte, umfassend die Einrichtung (6) an oder in der Extrusionseinheit (2) angeordnet oder ausgebildet ist.
6. Vorrichtung nach Aspekt 5, wobei die Einrichtung (6), insbesondere wenigstens ein Erfassungselement (7.1), im Bereich eines Austrittsbereichs (2.3) der Extrusionseinheit (2) angeordnet oder ausgebildet ist.
7. Vorrichtung nach Aspekt 6, wobei die Einrichtung, insbesondere ein Erfassungselement, in wenigstens einem Bewegungsfreiheitsgrad relativ zu dem Austrittsbereich bewegbar im Bereich des Austrittsbereichs angeordnet oder ausgebildet ist.
8. Vorrichtung nach einem der vorhergehenden Aspekte, umfassend die Einrichtung mehrerer Erfassungselemente, welche unter Ausbildung einer, insbesondere ein flächiges Array bildenden, Erfassungselementanordnung angeordnet sind.
9. Vorrichtung nach einem der vorhergehenden Aspekte, wobei ein Prozessparameter wenigstens einen chemischen und/oder wenigstens physikalischen Parameter eines Prozessraums, in welchem ein vermittels der Vorrichtung (1) durchführbarer oder durchgeführter extrusionsbasierter Herstellungsprozess erfolgt, beschreibt, und/oder wenigstens einen chemischen und/oder geometrischen und/oder physikalischen Parameter wenigstens eines im Rahmen eines vermittels der Vorrichtung (1) durchführbaren oder durchgeführten extrusionsbasierten Herstellungsprozesses verwendbaren oder verwendeten Extrusionsmaterials beschreibt, und/oder einen Parameter, insbesondere einen, gegebenenfalls örtlichen und/oder zeitlichen, Bewegungsparameter, einer Bewegungsbahn der Extrusionseinheit (2) und/oder einer über die Extrusionseinheit (2) auf einen Untergrund aufgebrachten Extrusionsmaterialbahn beschreibt, und/oder einen Parameter, insbesondere einen Oberflächenbeschaffenheitsparameter, eines Untergrunds, wie z. B. einer Bauplattform, beschreibt.
10. Vorrichtung nach einem der vorhergehenden Aspekte, wobei ein Objektparameter wenigstens einen chemischen und/oder geometrischen und/oder wenigstens physikalischen Parameter eines im Rahmen eines vermittels der Vorrichtung (1) durchführbaren oder durchgeführten extrusionsbasierten Herstellungsprozesses herzustellenden oder hergestellten dreidimensionalen Objekts oder Objektabschnitts beschreibt.
11. Vorrichtung nach einem der vorhergehenden Aspekte, wobei die Einrichtung (6) eingerichtet ist, ein ein- oder mehrdimensionales Abbild entsprechender Parameterinformationen beschreibende Bildinformationen zu erzeugen.
12. Vorrichtung nach Aspekt 11, umfassend eine Ausgabeeinrichtung (10), welche zur Ausgabe entsprechender Bildinformationen an oder über ein Ausgabeelement eingerichtet ist.
13. Vorrichtung nach einem der vorhergehenden Aspekte, wobei die Einrichtung (6) eingerichtet ist, eine entsprechende Parameterinformationen mit wenigstens einer, insbesondere korrespondierenden, Referenzparameterinformation zu vergleichen und eine ein jeweiliges Vergleichsergebnis beschreibende Vergleichsinformation zu erzeugen.
14. Vorrichtung nach einem der vorhergehenden Aspekte, umfassend eine Steuereinrichtung (13), welche zur Steuerung des Betriebs der Vorrichtung (1), insbesondere des Betriebs der Extrusionseinheit (2) der Vorrichtung (1), eingerichtet ist, wobei die Steuereinrichtung (13) zur Steuerung des Betriebs der Vorrichtung (1), insbesondere des Betriebs einer Extrusionseinheit (2) der Vorrichtung (1), auf Grundlage einer entsprechenden Parameterinformation und/oder auf Grundlage einer entsprechenden Vergleichsinformation eingerichtet ist.
15. Vorrichtung nach einem der vorhergehenden Aspekte, umfassend eine der Einrichtung (6) zugeordnete Temperiereinrichtung (16), welche zur Temperierung, insbesondere zur Kühlung, der Einrichtung (6) eingerichtet ist.
16. Vorrichtung nach Aspekt 15, wobei die Temperiereinrichtung (16) als eine Wärmetauschereinrichtung ausgebildet ist oder eine solche umfasst.
17. Vorrichtung nach Aspekt 16, wobei die Wärmetauschereinrichtung wenigstens zwei Strömungskanalstrukturen umfasst, wobei sich eine von einem ersten Temperierfluid durchströmbare erste Strömungskanalstruktur durch ein erstes Raumvolumen erstreckt, in welchem die Einrichtung (6), insbesondere wenigstens ein Erfassungselement (7.1) einer Erfassungseinrichtung (7) der Einrichtung (6), angeordnet oder ausgebildet ist, und sich eine von einem zweiten Temperierfluid durchströmbare zweite Strömungskanalstruktur durch ein von dem ersten Raumvolumen durch eine Wärmeübertragungsstruktur, insbesondere eine Wandstruktur, getrenntes zweites Raumvolumen erstreckt.
18. Vorrichtung nach einem der vorhergehenden Aspekte, wobei der Erfassungsbereich ein oder mehrerer Erfassungselemente (7.1) einer Erfassungseinrichtung (7) der Einrichtung (6) auf einen Bereich unterhalb des Austrittsbereichs der Extrusionseinheit (2) ausrichtbar oder ausgerichtet ist.
19. Verfahren zur extrusionsbasierten Herstellung wenigstens eines dreidimensionalen Objekts, insbesondere vermittels einer Vorrichtung (1) nach einem der vorhergehenden Aspekte, umfassend die folgenden Schritte:
   Erfassung einer einen Prozessparameter eines vermittels der Vorrichtung (1) durchführbaren oder durchgeführten extrusionsbasierten Herstellungsprozesses und/oder einen Objektparameter eines vermittels der Vorrichtung (1) herzustellenden oder hergestellten dreidimensionalen Objekts betreffenden Parameterinformation, sowie
   Erzeugung einer einen Erfassungsort und/oder eine Erfassungszeit einer entsprechenden Parameterinformation Objektinformation beschreibenden Orts- und/oder Zeitinformation.

## Patentansprüche

1. Vorrichtung (1) zur extrusionsbasierten Herstellung wenigstens eines dreidimensionalen Objekts, umfassend wenigstens eine Extrusionseinheit (2), welche zum Aufschmelzen eines Extrusionsmaterials und/oder zum Aufbringen eines aufgeschmolzenen Extrusionsmaterials auf einen Untergrund eingerichtet ist, umfassend eine Einrichtung (6), welche zur Erfassung einer einen Prozessparameter eines vermittels der Vorrichtung durchführbaren oder durchgeführten extrusionsbasierten Herstellungsprozesses und/oder einen Objektparameter eines vermittels der Vorrichtung (1) herzustellenden oder hergestellten dreidimensionalen Objekts betreffenden Parameterinformation sowie zur Erzeugung einer einen Erfassungsort und/oder eine Erfassungszeit einer entsprechenden Parameterinformation beschreibenden Orts- und/oder Zeitinformation eingerichtet ist.

2. Vorrichtung nach Anspruch 1, wobei die Einrichtung (6) eine Erfassungseinrichtung (7) umfasst, welche wenigstens ein Erfassungselement (7.1), welches zur Erfassung einer Parameterinformation eingerichtet ist, umfasst, wobei optional die Erfassungseinrichtung (7) eine akustische oder optische oder thermische Erfassungseinrichtung ist, welche wenigstens ein Erfassungselement (7.1) zur akustischen oder optischen oder thermischen Erfassung einer Parameterinformation umfasst.

3. Vorrichtung nach einem der vorhergehenden Ansprüche, wobei die Erfassungseinrichtung (7) in wenigstens einem Bewegungsfreiheitsgrad, insbesondere relativ zu dem oder einem Untergrund, bewegbar gelagert ist.

4. Vorrichtung nach einem der vorhergehenden Ansprüche, wobei die Einrichtung (6) an oder in der Extrusionseinheit (2) angeordnet oder ausgebildet ist.

5. Vorrichtung nach Anspruch 4, wobei die Einrichtung (6), insbesondere wenigstens ein Erfassungselement (7.1), im Bereich eines Austrittsbereichs (2.3) der Extrusionseinheit (2) angeordnet oder ausgebildet ist.

6. Vorrichtung nach Anspruch 5, wobei die Einrichtung, insbesondere ein Erfassungselement, in wenigstens einem Bewegungsfreiheitsgrad relativ zu dem Austrittsbereich bewegbar im Bereich des Austrittsbereichs angeordnet oder ausgebildet ist.

7. Vorrichtung nach einem der vorhergehenden Ansprüche, wobei die Einrichtung mehrere Erfassungselemente umfasst, welche unter Ausbildung einer, insbesondere ein flächiges Array bildenden, Erfassungselementanordnung angeordnet sind.

8. Vorrichtung nach einem der vorhergehenden Ansprüche, wobei die Einrichtung (6) eingerichtet ist, ein ein- oder mehrdimensionales Abbild entsprechender Parameterinformationen beschreibende Bildinformationen zu erzeugen.

9. Vorrichtung nach Anspruch 8, umfassend eine Ausgabeeinrichtung (10), welche zur Ausgabe entsprechender Bildinformationen an oder über ein Ausgabeelement eingerichtet ist.

10. Vorrichtung nach einem der vorhergehenden Ansprüche, wobei die Einrichtung (6) eingerichtet ist, eine entsprechende Parameterinformationen mit wenigstens einer, insbesondere korrespondierenden, Referenzparameterinformation zu vergleichen und eine ein jeweiliges Vergleichsergebnis beschreibende Vergleichsinformation zu erzeugen.

11. Vorrichtung nach einem der vorhergehenden Ansprüche, umfassend eine Steuereinrichtung (13), welche zur Steuerung des Betriebs der Vorrichtung (1), insbesondere des Betriebs der Extrusionseinheit (2) der Vorrichtung (1), eingerichtet ist, wobei die Steuereinrichtung (13) zur Steuerung des Betriebs der Vorrichtung (1), insbesondere des Betriebs einer Extrusionseinheit (2) der Vorrichtung (1), auf Grundlage einer entsprechenden Parameterinformation und/oder auf Grundlage einer entsprechenden Vergleichsinformation eingerichtet ist.

12. Vorrichtung nach einem der vorhergehenden Ansprüche, umfassend eine der Einrichtung (6) zugeordnete Temperiereinrichtung (16), welche zur Temperierung, insbesondere zur Kühlung, der Einrichtung (6) eingerichtet ist,

13. Vorrichtung nach Anspruch 12, wobei die Temperiereinrichtung (16) als eine Wärmetauschereinrichtung ausgebildet ist oder eine solche umfasst.

14. Vorrichtung nach Anspruch 12 oder 13, wobei die Wärmetauschereinrichtung wenigstens zwei Strömungskanalstrukturen umfasst, wobei sich eine von einem ersten Temperierfluid durchströmbare erste Strömungskanalstruktur durch ein erstes Raumvolumen erstreckt, in welchem die Einrichtung (6), insbesondere wenigstens ein Erfassungselement (7.1) einer Erfassungseinrichtung (7) der Einrichtung (6), angeordnet oder ausgebildet ist, und sich eine von einem zweiten Temperierfluid durchströmbare zweite Strömungskanalstruktur durch ein von dem ersten Raumvolumen durch eine Wärmeübertragungsstruktur, insbesondere eine Wandstruktur, getrenntes zweites Raumvolumen erstreckt.

15. Vorrichtung nach einem der vorhergehenden Ansprüche, wobei der Erfassungsbereich ein oder mehrerer Erfassungselemente (7.1) einer Erfassungseinrichtung (7) der Einrichtung (6) auf einen Bereich unterhalb des Austrittsbereichs der Extrusionseinheit (2) ausrichtbar oder ausgerichtet ist.
